# NEUE EUROPÄISCHE PATENTSCHRIFT

(11) **EP 2 690 415 B2**
(45) Veröffentlichungstag und Bekanntmachung des Hinweises auf die Entscheidung über den Einspruch: **18.05.2022**
(45) Hinweis auf die Patenterteilung: 20.06.2018
(21) Anmeldenummer: 12177470.7
(22) Anmeldetag: 23.07.2012
(51) Int. Cl.: G01G 7/02, G01G 21/24, G01G 21/26, G01G 23/16

(54) **Kraftmessvorrichtung mit Verschiebegewicht**
Force measurement device with sliding weight
Dispositif de mesure de force avec poids de déplacement

(43) Veröffentlichungstag der Anmeldung: 29.01.2014
(73) Patentinhaber: Mettler-Toledo GmbH, 8606 Greifensee (CH)
(72) Erfinder: Metzger, Andreas (Hr.), 8708 Männedorf (CH); Baltisberger, Stephan (Hr.), 8625 Gossau (CH); Burkhard, Hans-Rudolf (Hr.), 8492 Wila (CH)
(74) Vertreter: Kraus, Jürgen Helmut

(56) Entgegenhaltungen:
- DE-A1- 2 803 978
- DE-A1- 10 134 281
- DE-A1-102004 024 109
- DE-T2- 60 130 529
- GB-A- 2 000 305
- JP-A- 2006 337 207
- JP-A- 2010 139 315
- US-A- 4 100 985
- US-A- 4 165 791
- US-A- 5 092 416
- US-A1- 2008 053 249

## Beschreibung

Die Erfindung betrifft eine nach dem elektromagnetischen Kraftkompensationsprinzip arbeitende Kraftmessvorrichtung für ein gravimetrisches Messinstrument mit einem am Wägebalken angeordneten und verschiebbaren Verschiebegewicht.

Bei Wägezellen, welche nach dem Prinzip der elektromagnetischen Kraftkompensation arbeiten, im Englischen bekannt unter Magnetic Force Restauration oder abgekürzt MFR Wägezellen genannt, wird die Gewichtskraft des Wägeguts entweder direkt oder durch einen oder mehrere Kraftübertragungshebel zu einem elektromechanischen Messaufnehmer übertragen, welcher eine der Gewichtskraft des Wägeguts entsprechende Kompensationskraft erzeugt und dabei ein elektrisches Signal zur Verfügung stellt, das durch eine Wägeelektronik, der Prozesseinheit, weiterverarbeitet und zur Anzeige gebracht wird.

In einer MFR-Wägezelle wird die Gewichtskraft des Wägeguts durch eine elektrische Ersatzgrösse gemessen. Aus verschiedenen technischen Gründen unterliegt diese Messung Ungenauigkeiten und deshalb ist die relative Auflösung einer MFR-Wägezelle begrenzt. Darüber hinaus ist die relative Auflösung einer MFR-Wägezelle auch dadurch begrenzt, dass sie einen Wägebalken aufweist, welcher durch Untergrundvibrationen mehr oder weniger stark zum Schwingen angeregt werden kann. Diese Schwingungen können dann im Wägesignal als nicht kompensierbare Störungen in Erscheinung treten.

Aus dem Stand der Technik ist bekannt, dass man bei höchstauflösenden Kraftmessvorrichtungen, wie z.B. bei Massenkomparatoren, die Auflösungsbegrenzung, die durch den elektrischen Messprozess gegeben ist, schrittweise verschiebt, indem man am Wägebalken auf der Seite der Kompensationskraft, beziehungsweise auf der Seite des Messaufnehmers, bewusst mehr Masse anbringt, so dass der Wägebalken durch Auflegen von so genannten Substitutionsgewichten auf der Gegenseite, d.h. auf der Seite des Gehänges, ins Gleichgewicht kommt. Mit diesen Substitutionsgewichten lässt sich das Wägefenster der Kraftmessvorrichtung, das ohne diese Substitutionsgewichte von einer Minimal- bis zu einer Maximallast reichen würde, um die Last der Substitutionsgewichte verschieben. Solche Kraftmessvorrichtungen nennt man Fensterkomparator-Wägezellen und sind z.B. bekannt aus DE 2 621 483 B1.

Im Bereich gravimetrischer Messinstrumente mit elektromagnetischer Kraftkompensation ist das Wägefenster einer Kraftmessvorrichtung jener Gewichtsbereich, in welchem durch die Änderung der Kompensationskraft des Messaufnehmers die Masse des Wägeguts gemessen werden kann. Die Breite dieses Gewichtsbereichs ist deshalb bestimmt und limitiert durch die maximale Kompensationskraft des Messaufnehmers (Je stärker die Kompensationskraft eines Messaufnehmers ist, umso breiter wird das Wägefenster).

Aus US 4 165 791 ist eine Waage bekannt bei der mit dem Auflegen beziehungsweise Abheben von Substitutionsgewichten der mechanische Nullpunkt, und damit zugleich das Wägefenster, einer Kraftmessvorrichtung verschoben werden kann. Für das Wägen einer unbekannten Gewichtskraft liegen alle Substitutionsgewichte am Gehänge auf und durch ein Gegengewicht wird diese Ausgangs-Nulllage ausbalanciert. Nach dem Auflegen des zu messenden Wägeguts wird gerade etwas weniger Gewichtskraft vom Gehänge entfernt als der entsprechenden Gewichtskraft des Wägeguts entspricht. Das verbleibende Ungleichgewicht wird durch eine elektromagnetische Spule kompensiert. Nachteilig dabei ist, dass dabei am Wägebalken immer viel Masse hängt, und diese reduziert die mechanische Robustheit der Wägezelle gegenüber Untergrundanregungen, insbesondere gegenüber rotativen Störanregungen. Um die Komplexität in der Ausführung zu reduzieren verwendet man bei Waagen mit Substitutionsgewichten wie sie die US 1 165 791 offenbart eine möglichst geringe Anzahl von Zusatzgewichten. Dies hat zur Folge, dass das Wägefenster nur in grossen Sprüngen verschoben werden kann.

In DE 2 803 978 A1 ist zum Ausgleich aller am Waagenmechanismus angehängten Gewichte am vom Schalenträger abgewandten Ende des Spulenhebels ein Gegengewicht angeordnet. Das Gegengewicht entspricht unter Berücksichtigung des Übersetzungsverhältnisses des Spulenhebels dem grössten zu messenden Gewicht einschliesslich des Eigengewichts des Schalenträgers und der Waagschale. Das Gegengewicht wird nach der Fertigung der Wägezelle positioniert und mittels eines Schraubenbolzens die Feineinstellung des Waagenmechanismus justiert. Das so eingestellte Gegengewicht wird meist durch den Waagenhersteller arretiert und gesichert, zum Beispiel durch einen Tropfen Versiegelungsflüssigkeit, damit sich das Gegengewicht nicht verschiebt oder verschiebt wird.

Der mechanische Nullpunkt ist der Betriebspunkt einer Kraftmessvorrichtung, bei dem der Wägebalken ohne Kompensationskraft ausbalanciert ist. In diesem Zustand ist der Messfehler der elektrischen Messgrösse am kleinsten, d.h. dass die Kraftmessvorrichtung hier ihre höchste Auflösung erreicht. Zudem ist die Kraftmessvorrichtung in diesem Lastpunkt unempfindlich gegenüber vertikalen Untergrundanregungen.

In DE 10 342 272 B3 wird eine Lösung offenbart, mit welcher bei der Kompensation einer Totlast die Eigenschwingungen des Übersetzungshebels mit einem Gegengewicht minimiert werden, so dass wechselnde Spulenkräfte sich nicht schwingungsanregend auswirken. Dies wird erreicht durch die Anordnung des Gegengewichtes oberhalb der Spule. Der so am Ort der Spule erzeugte Schwingungsknoten kann sich nicht mehr schwingungsanregend auswirken. Dabei ist das Gegengewicht auf die Totlast, hier die Waagschale, abgestimmt und es kann kein Einfluss auf eine Änderung dieser Totlast vorgenommen werden, um zum Beispiel einen Behälter als weitere Totlast zu berücksichtigen.

Eine Waage mit Verschiebegewicht ist in GB 2 000 305 A gezeigt. Diese Waage arbeitet jedoch nicht nach dem Prinzip der elektromagnetischen Kraftkompensation, sondern benützt das Verschiebegewicht zur Bestimmung der aufgelegten Gewichtskraft. Ein aus einem flexiblen Band mit vier aufgeklebten Dehnmessstreifen bestehender Gleichgewichtsdetektor misst die Auslenkung des Wägebalkens. Entsprechend der gemessenen Auslenkung verschiebt ein elektrischer Antrieb mittels einer Spindel das Verschiebegewicht entlang des Wägebalkens um den Wägebalken wieder ins Gleichgewicht zu bringen. Über einen Decoder werden die Umdrehungen der Spindel erfasst und die Position des Verschiebegewichts bestimmt. Anhand der Position des Verschiebegewichts wird schlussendlich die aufgelegte Gewichtskraft errechnet.

Die Aufgabe der vorliegenden Erfindung besteht in der Schaffung einer nach dem elektromagnetischen Kraftkompensationsprinzip arbeitenden Kraftmessvorrichtung, bei welcher deren mechanischer Nullpunkt und das Wägefenster automatisch und kontinuierlich an die Anwendungsbedürfnisse der zu messenden Last angepasst werden können und dabei die am Wägebalken angelegte Last minimal ist.

Die Aufgabe wird erfindungsgemäss mit einer nach dem elektromagnetischen Kraftkompensationsprinzip arbeitenden Kraftmessvorrichtung für ein gravimetrisches Messinstrument, mit einem feststehenden Bereich und mit einem Lastaufnahmebereich, welche durch Parallellenker verbunden sind, gelöst. Die Kraftmessvorrichtung umfasst weiter mindestens einen Wägebalken, welcher über eine an einem ersten Hebelarm des Wägebalkens angreifende Koppel mit dem Lastaufnahmebereich verbunden ist, und welcher an einem zweiten Hebelarm des Wägebalkens mit einem am feststehenden Bereich angeordneten Messaufnehmer verbunden ist. Dabei können zwischen den Hebelarmen des Wägebalkens und dem Lastaufnahmebereich bzw. dem Messaufnehmer weitere Hebel angeordnet sein. Am mindestens einen Wägebalken ist mindestens ein Verschiebegewicht angeordnet, wobei vermittels eines Antriebs die Position des Verschiebegewichts vermittels der durch den Messaufnehmer und/oder einer mit dem Messaufnehmer zusammenwirkenden Positionsmessvorrichtung erfassten Messgrösse gesteuert veränderbar ist.

Durch die Erfindung kann eine Vergrösserung des Wägebereichs erreicht werden. Als Wägebereich einer Kraftmessvorrichtung wird jener Gewichtsbereich verstanden, in welchem die Masse des Wägeguts bestimmt werden kann. Die Verschiebung eines Verschiebegewichts ist gleichbedeutend mit einer Verschiebung des Wägefensters. Zudem kann auch eine Feinplatzierung des mechanischen Nullpunkts am Betriebspunkt, und damit eine optimale Ausnutzung des Wägefensters, realisiert werden. Dies hat den Vorteil, dass die bestmögliche Auflösung der Kraftmessvorrichtung in jedem Betriebspunkt erreicht werden kann.

Bei einer Tarierung in diesem Betriebspunkt und einer Einwägung von kleinen Lasten, was bei Mikrowägezellen oft der Fall ist, kann die erfinderische Kraftmessvorrichtung vorteilhafterweise immer in der Nähe des Betriebspunkts betreiben werden, der optimale Robustheit gegenüber vertikaler Untergrundanregung garantiert, d.h. im mechanischen Nullpunkt.

Anstelle von Substitutionsgewichten und eines schweren Hebels, bedingt durch das Gegengewicht und die dadurch nötige stabile und steife Konstruktion des Hebels, können nun der mechanische Nullpunkt und das Wägefenster für die Anwendungsbedürfnisse stufenlos eingestellt werden, indem man das Verschiebegewicht entlang des Wägebalkens verschiebt.

Bevorzugt kommt eine solche Kraftmessvorrichtung bei der Verwiegung von Wägegütern in einem Behältnis zur Anwendung, da die durch das Behältnis erzeugte Vorlast das Wägefenster einschränkt, d.h. das verbleibende Wägefenster verkleinert. Die Vorlast, auch Taralast genannt, ist derjenige Teil eines Wägeguts, welcher nicht Gegenstand der Wägung ist, von der eigentlichen Last aber nicht getrennt werden kann. Durch das Verschiebegewicht wird die Vorlast kompensiert und das gesamte Wägefenster steht wieder für das Verwiegen des Wägeguts selbst zur Verfügung.

Die Erfindung eignet sich für Massenkomparatoren oder Kraftmessvorrichtungen einer Mikrowaage, da es hier oft der Fall ist, dass man diese im optimalen Betriebspunkt auch tarieren möchte, denn eine Gewichtskraftmessung mit einem Betriebspunkt nahe dem mechanischen Nullpunkt bietet optimale Robustheit gegenüber vertikalen Untergrundanregungen.

Bei dynamischen Kontrollwaagen werden die über ein Transportförderband geführten Produkte, bzw. Wägegüter, während des Transports verwogen. Dazu ist ein Förderband auf einer Kraftmessvorrichtung montiert, auf welche die Gewichtskraft des Förderbandes und des Wägeguts wirkt. Die heutigen Kontrollwagen werden so ausgelegt, dass die Masse des Förderbandes durch eine Gegenkraft, zum Beispiel einem Gegengewicht, kompensiert wird. Die vom Wägegut beim Befahren und Verlassen des Förderbandes in Schwingung gesetzte Kontrollwaage verfälscht das Wägeresultat oder macht es nötig die Anzahl Wägungen pro Zeiteinheit zu reduzieren um ein genaueres Wägeresultat zu erhalten. Mit einer erfindungsgemässen Kraftmessvorrichtung mit Push-Pull-System kann deren Betriebspunkt, bzw. mechanischer Nullpunkt an das Wägegut angepasst werden und, wenn mehr als ein Verschiebegewicht vorhanden ist, auch die Massenträgheit der Gegenkraft bzw. des Gegengewichts an diejenige des Lastaufnahmebereichs (inklusive Wägegut) angepasst werden. Dies minimiert die Schwingungsanfälligkeit und erhöht die mögliche Anzahl Wägungen pro Zeiteinheit. Vorteilhaft ist diese Anpassungsmöglichkeit deshalb, weil so die dynamische Kontrollwaage in mehreren Produktionslinien oder für verschiedene Produkte bzw. Wägegüter eingesetzt werden kann.

Zudem bringt die Erfindung den Vorteil, dass verschiedene Vorlasten, Förderbänder beziehungsweise Wägebänder, mit nur einem Typ einer Kraftmessvorrichtung kombiniert werden können. Es vereinfacht so das Sortiment der Bauelemente für eine dynamische Kontrollwaage.

Die Erfindung eignet sich sowohl für Kraftmessvorrichtungen mit Messaufnehmer, welche nach dem Push-Prinzip und solche, die nach dem Push-Pull-Prinzip die Kompensationskraft erzeugen. Ihr Unterschied liegt in der Erzeugung der Kompensationskraft: ein Push-System kann die Kompensationskraft in nur eine Richtung erzeugen, während ein Push-Pull-System in der Lage ist eine Kompensationskraft in zwei entgegengesetzte Richtungen zu erzeugen. Es ist dazu von Nöten die Masse des zweiten Hebelarms anzupassen beziehungsweise an diesem ein Zusatzgewicht anzubringen, oder die Masse des ersten Hebels oder die des Lastaufnahmebereichs zu verkleinern. Somit ist bei einem Push-Pull-System die Position des mechanischen Nullpunktes immer innerhalb des Wägefensters, was wiederum die Genauigkeit der Kraftmessvorrichtung verbessert. Speziell bei symmetrischen Push-Pull-Systemen liegt der mechanische Nullpunkt in der Mitte des Wägefensters.

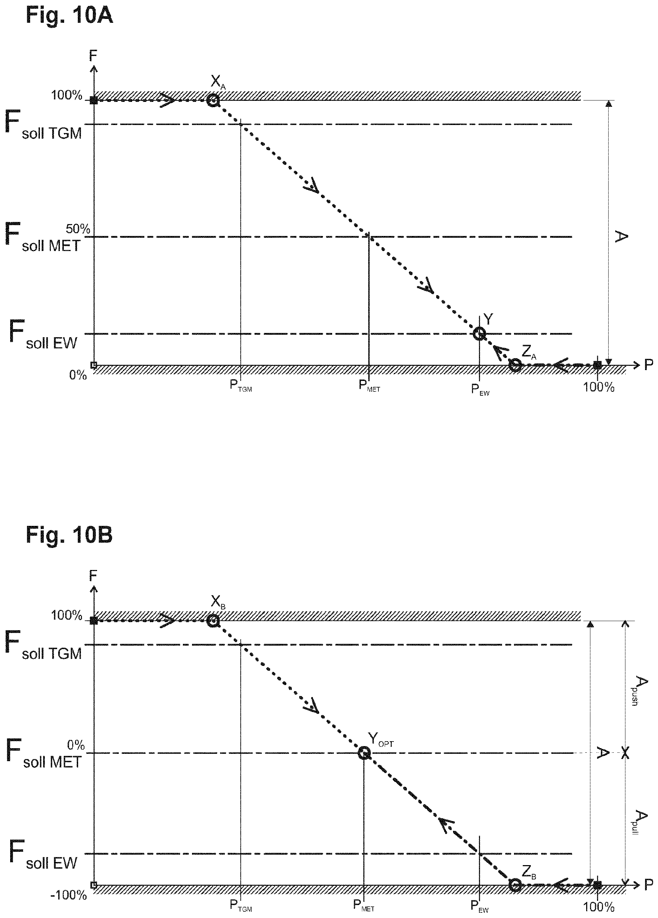

Eine Kompensation der Vorlast im Sinne dieser Erfindung soll nachfolgend anhand eines Beispiels einer Sollwerteinstellung (wie anhand der Figur 10 detailliert beschrieben wird) für eine Einwägung näher erläutert werden.

In einer MFR-Wägezelle wird durch eine Positionsmessvorrichtung die Abweichung zum Gleichgewichtszustand ermittelt und durch eine Steuerung ausgewertet. Eine Verarbeitungseinheit regelt nun den Strom für den Messaufnehmer (typischerweise als Spule ausgebildet) womit dieser eine Kompensationskraft erzeugt, welche einer Gegenkraft der Gewichtskraft des Wägeobjekts entspricht. Für eine gute Regelung des Gleichgewichtszustandes in einem Push-System muss ständig ein wenig Strom durch den Messaufnehmer fliessen, das heisst die Kompensationskraft des Verschiebegewichts soll immer etwas kleiner als die Gewichtskraft des Wägeobjekts sein. Aus diesem Grund wird das Verschiebegewicht nicht bis zur exakten Gleichgewichtsposition verschoben, denn die verbleibende Kompensationskraft wird dann noch vom Messaufnehmer erbracht. Dies ermöglicht insbesondere auch eine präzise Messung. Die verbleibende Teilkompensationskraft, welche der Messaufnehmer erbringt, entspricht etwa 2% bis 8% der gesamten Kompensationskraft. In einem Push-Pull-System kann hingegen die gesamte Kompensationskraft vom Verschiebegewicht erbracht werden.

Als Wägebalken wird im Sinne dieser Anmeldung derjenige Hebel benannt, welcher sich dadurch auszeichnet, dass an diesem Hebel mindestens ein Verschiebegewicht angebracht ist. Dies kann im Falle einer mehrfachen Hebelübertragung jeder als geeignet erscheinender Hebel sein, auch können an mehreren verschiedenen Hebeln Verschiebegewichte angebracht sein. Je nach gewählter Kraftübersetzung, Auswahl des Hebels als Wägebalken und natürlich der jeweiligen Verschiebegewichte, kann das Verschiebegewicht eine grössere oder geringere Kompensationskraft erbringen. Vorteilhaft ist die Auslegung mit zwei als Wägebalken definierten Hebeln, so dass am einen Wägebalken eine Grobeinstellung und am anderen Wägebalken eine Feineinstellung vorgenommen werden kann. Das Eigengewicht des Messaufnehmers, insbesondere der Spule einer MFR-Wägezelle, sollte dabei auch in Betracht gezogen werden und ist vorteilhafterweise der Gewichtskraft auf der Waagschale entgegenwirkend.

Eine Weiterbildung der Erfindung sieht vor, dass durch die Veränderung der Position des Verschiebegewichts die Position des Wägefensters der Kraftmessvorrichtung veränderbar ist und/oder eine auf den Lastaufnahmebereich wirkende Last kompensierbar ist und/oder der Auftrieb einer auf den Lastaufnahmebereich wirkenden Last kompensierbar ist und/oder die Empfindlichkeit auf rotative Schwingungen teilweise oder ganz kompensierbar ist.

Die Erfindung sieht vor, dass die Position des Verschiebegewichts vermittels der durch den Messaufnehmer und/oder einer mit dem Messaufnehmer zusammenwirkenden Positionsmessvorrichtung erfassten Messgrösse gesteuert veränderbar ist.

Eine Weiterbildung der Erfindung sieht vor, dass der Messaufnehmer als elektrische Spule ausgestaltet ist und wobei der durch die elektromagnetische Spule fliessende und die Kompensationskraft erbringende Spulenstrom die Messgrösse für die Positionierung des Verschiebegewichts darstellt. Die dabei erfasste Messgrösse kann unmittelbar als Stellgrösse für die Position des Verschiebegewichts bestimmbar bzw. bestimmt sein, wenn sich der Betriebspunkt innerhalb des Wägefensters befindet.

Eine weitere Ausgestaltung der Erfindung sieht vor, dass die Positionsmessvorrichtung ein optoelektronischer Lagesensor ist, mit einem Lichtsender und einem Lichtempfänger, welche mit einem Zwischenraum auf dem feststehenden Bereich angeordnet sind, sowie eine den Zwischenraum durchsetzende und die Auslenkung der beweglichen Teile mitmachende Blendenfahne, und dessen Sensorsignal eine durch das Auflegen der Last auf den Lastaufnahmebereich verursachten Auslenkung der miteinander verbundenen beweglichen Teile der Waage aus einer Null-Lage entspricht, und dabei die Messgrösse für die Positionierung des Verschiebegewichts darstellt.

Eine besonders vorteilhafte Weiterbildung der Erfindung sieht vor, dass die Position des Verschiebegewichts vermittels einer Verschiebemessvorrichtung als Positionseinstellung, als Vorlastkompensationseinstellung, als Auftriebskompensationseinstellung und/oder als Rotationskompensationseinstellung des mindestens einen Verschiebegewichts erfasst und in einem Speicher einer Verarbeitungseinheit abgelegt werden kann, z.B. in Form einer Tabelle oder Kurve, um zu einem späteren Zeitpunkt abrufbar zu sein. Dies hat den Vorteil, dass z.B. mehrere Wägegefässe in einer Datenbank abgelegt werden können und so beim Einwägen Zeit gespart werden kann.

Eine andere vorteilhafte Weiterbildung der Erfindung sieht vor, dass die Verarbeitungseinheit der Kraftmessvorrichtung mittels einer am Lastaufnahmebereich angeordneten Erkennungsvorrichtung ein Behältnis durch Strichcode oder RFID-Chip oder mittels einer mit dem gravimetrischen Messinstrument in Verbindung stehenden Erkennungsvorrichtung erkennbar ist, und die dem Behältnis zugeordnete und in einem Speicher abgelegte Positionseinstellung, und/oder Vorlastkompensationseinstellung und/oder Auftriebskompensationseinstellung und/oder Rotationskompensationseinstellung für das mindestens eine Verschiebegewicht abrufbar ist. So kann die Sollwerteinstellung automatisiert und eine mögliche Fehlerquote bei der Bedienung kann minimiert werden.

Besonders bevorzugt ist der Erfindungsgegenstand bei häufig wechselnden Behältnissen. Die Position des mindestens einen Verschiebegewichts kann in einem Speicher gespeichert werden, damit für eine spätere Messung mit demselben Behältnis dieselbe Vorlast wieder eingestellt werden kann, indem das Verschiebegewicht an dieselbe Position verschoben wird.

Die Positionierung der Verschiebegewichte durch die Verarbeitungseinheit, aufgrund einer Vorlastkompensation und/oder die Auftriebskompensation und/oder Rotationskompensation, ist für jedes einzelne Verschiebegewicht und deren Relativpositionen zu einander, auf allen Positionen des Verschiebeweges in einem Speicher der Verarbeitungseinheit abgelegt, um zu einem späteren Zeitpunkt erneut angefahren werden zu können. So muss der Benutzer der Bedienungseinheit lediglich einen Gewichtswert für eine Vorlast- und/oder Auftriebskompensation und/oder Rotationskompensation an die Verarbeitungseinheit übermitteln.

Eine vorteilhafte Weiterbildung der Erfindung sieht vor, dass der Massenschwerpunkt des mindestens einen Verschiebegewichts auf der niveauneutralen Ebene angeordnet ist und das Verschiebegewicht auf dieser verschiebbar ist.

Wenn die Drehachse und der Massenschwerpunkt des Wägebalkens (mit Spule aber ohne Verschiebegewichte), die Verbindung des ersten Hebelarms mit der Koppel, und der Krafterzeugungsmittelpunkt des Messaufnehmers, zusammen auf einer Ebene liegen, so ist der Wägebalken ohne aufgelegte Last momentfrei und unabhängig von einem schiefen Untergrund stets im Gleichgewicht. Diese Ebene wird niveauneutrale Ebene genannt.

Ein anderer Aspekt der Erfindung sieht vor, dass am Wägebalken mindestens zwei Verschiebegewichte auf der niveauneutralen Ebene angeordnet sind und die Verschiebegewichte auf dieser unabhängig voneinander verschiebbar sind. Damit lassen sich durch zwei kleinere Verschiebegewichte, in der Summe dem oben erwähnten einen Verschiebegewicht entsprechend, der optimale Betriebspunkt, sowie die Positionierung des Wägefensters relativ zu diesem, dem Messvorhaben besser anpassen. Insbesondere kann so die Massenträgheit oder die Dichte (siehe Dichtekompensation in der Detailbeschreibung) auf der Seite des Messaufnehmers (zweiter Hebelarm) an diejenige Seite des Lastaufnahmebereiches (erster Hebelarm) angepasst werden.

Eine besonders vorteilhafte Weiterbildung der Erfindung sieht vor, dass die mindestens zwei Verschiebegewichte je eine unterschiedliche Dichte aufweisen und/oder auswechselbar ausgestaltet sind. Dadurch lassen sich nicht nur die Masse, sondern auch die Dichte des Wägeguts auf der, dem Messaufnehmer zugewandten Seite des Wägebalkens (zweiter Hebelarm) an die, dem Lastaufnahmebereich zugewandte Seite (erster Hebelarm) anpassen. Die auswechselbaren Verschiebegewichte haben den Vorteil, dass die Kraftmessvorrichtung an die Messaufgaben angepasst werden kann.

Eine bevorzugte Ausführungsform der Erfindung zeichnet sich dadurch aus, dass an mehr als dem mindestens einen Wägebalken je ein oder mehrere Verschiebegewichte verschiebbar angeordnet sind. Damit lassen sich der optimale Betriebspunkt, sowie die Positionierung des Wägefensters relativ zu diesem, dem Messvorhaben noch genauer anpassen, denn durch die unterschiedlichen Hebelübersetzungen kann die Verschiebung von Verschiebegewichten am einen Wägebalken als Grobeinstellung und die an einem anderen als Feineinstellung verwendet werden.

Weiter soll in einer Ausführungsform der Erfindung die Positionierung eines Verschiebegewichts mittels eines Linearantriebs oder eines piezoelektrischen Antriebs oder mittels Drehantrieb über eine Spindel erfolgen und dabei durch den Antrieb der Verschiebeweg des Verschiebegewichts bestimmbar ist. Alle drei Varianten des Antriebs haben den Vorteil, dass eine sehr genaue Positionierung erreicht werden kann.

Eine bevorzugte Ausführungsform der Erfindung weist einen elektrischen Antrieb zur Positionierung des mindestens einen Verschiebegewichts auf, wobei dieser Antrieb selbst Teil des Verschiebegewichts ist. Die Positionierung des mindestens einen Verschiebegewichts kann dadurch von der Verarbeitungseinheit geregelt werden und erhöht so den Automatisierungsgrad. Dadurch wird auch der Platzbedarf optimiert, indem der Antrieb durch sein Eigengewicht zugleich als Verschiebegewicht dient.

Eine Weiterbildung der Erfindung sieht vor, dass das mindestens eine Verschiebegewicht über ein Einkoppelungsmittel am zweiten Hebelarm angebracht ist, mit welchem das vom Verschiebegewicht aufgebrachte Gewicht einkoppelbar und auskoppelbar ist. Dies hat den Vorteil, dass zwischen zwei Wägefenstern schnell und präzise gewechselt werden kann, ohne das Verschiebegewicht zu bewegen, was wiederum die Reproduzierbarkeit erhöht.

Eine weitere vorteilhafte Weiterbildung der Erfindung sieht vor, dass das mindestens eine Verschiebegewicht derart verschiebbar ist, dass die Gewichtskraft des Verschiebegewichts der Kompensationskraft des Messaufnehmers entgegenwirkend ist. Dies ermöglicht es den mechanischen Nullpunkt eines Push-Pull-Systems auch an und über die Nulllast zu verschieben. Als Nulllast bezeichnet man den Zustand einer Kraftmessvorrichtung bei dem keine Last auf den Lastaufnahmebereich aufgelegt ist. Wird das Verschiebegewicht über die Nulllast verschoben, kann das Verschiebegewicht vorteilhafterweise auch zur Kalibrierung der Kraftmessvorrichtung verwendet werden und es entfällt der Einbau einer kompletten Kalibriereinheit einer Kraftmessvorrichtung.

In einem Verfahren zur Positionierung von mindestens einem Verschiebegewicht einer Kraftmessvorrichtung für ein gravimetrisches Messinstrument erfolgt diese Positionierung indem in einem Schritt eine Taralast, z.B. ein Kalibriergewicht aufgelegt, oder ein Gewichtswert durch den Benutzer eingegeben wird, oder eine Identifikation der Taralast mittels einer am Lastaufnahmebereich angeordneten Erkennungsvorrichtung durch Strichcode oder RFID-Chip oder mittels einer mit dem gravimetrischen Messinstrument in Verbindung stehenden Erkennungsvorrichtung stattfindet. In einem anderen Schritt wird ein Sollwert in Bezug auf das Wägefenster durch den Benutzer eingegeben (oder anders gesagt wird der Kompensationskraftanteil des Messaufnehmers festgelegt), oder ein Sollwert wird aus einem Speicher der Verarbeitungseinheit durch Festlegung des Messvorhabens ausgelesen. In einem nächsten Schritt wird das mindestens eine Verschiebegewicht mittels eines Antriebs verschoben und so positioniert, dass der Messaufnehmer den festgelegten Sollwert, beziehungsweise Kompensationskraftanteil erzeugt.

Dieses Verfahren ermöglicht es zwei abhängige Messungen, zum Beispiel bei Wägungen von Filtern, oder einzelne Messungen einer Messreihe, welche zeitlich lange auseinander liegen durchzuführen, so dass die Waage zwischenzeitlich anderweitig gebraucht werden kann. Es muss dabei sichergestellt werden, dass das gravimetrische Messinstrument mit denselben Konfigurationen, beziehungsweise Einstellungsparameter, verwendet wird wie bei der Messung, von welcher ausgegangen werden soll. Dazu gehört mindestens, dass derselbe Sollwert (bzw. Kompensationskraftanteil) gewählt und dasselbe Kalibriergewicht aufgelegt wird. Ein Kalibriergewicht kann ein extern auf die Waagschale aufgelegtes, genormt und/oder geprüftes Gewicht sein oder ein Kalibriergewicht einer innerhalb der Kraftmessvorrichtung eingebauten Kalibriereinheit sein, welche zu diesem Zweck das Kalibriergewicht zu oder weggeschalten kann.

In einem weiteren Verfahren wird zusätzlich ein Dichtewert des Wägeobjekts durch den Benutzer eingegeben oder mittels einer am Lastaufnahmebereich angeordneten Erkennungsvorrichtung durch Strichcode oder RFID-Chip oder mittels einer mit dem gravimetrischen Messinstrument in Verbindung stehenden Erkennungsvorrichtung erkannt, um danach, durch voneinander unabhängiges Verschieben, die jeweiligen Positionen von mindestens zwei Verschiebegewichten anzupassen.

Im Folgenden wird der Erfindungsgegenstand anhand von bevorzugten Ausführungsbeispielen, welche in den beiliegenden Zeichnungen dargestellt sind erläutert. Es zeigen:
- Fig. 1: Eine schematische Schnittdarstellung einer oberschaligen Kraftmessvorrichtung mit einem Verschiebegewicht;
- Fig. 2: eine schematische Schnittdarstellung einer oberschaligen Kraftmessvorrichtung mit einem Verschiebegewicht und mit weiteren Hebeln;
- Fig. 3: eine Schnittansicht durch die Fig. 1 an der Stelle der niveauneutralen Ebene in einer Ausführung mit zwei Verschiebegewichten;
- Fig. 4: eine Kraftmesszelle einer Kraftmessvorrichtung mit Verschiebegewicht;
- Fig. 5A & Fig. 5B: einen Wägebalken in seitlicher Darstellung (5A) und einer Aufsicht (5B) einer Kraftmessvorrichtung mit Verschiebegewichten;
- Fig. 6: eine dreidimensionale Ansicht eines Ausführungsbeispiels eines Verschiebegewichts;
- Fig. 7: ein Blockdiagramm mit dessen Hilfe der Funktionsablauf einer erfindungsgemässen Kraftmessvorrichtung beschrieben wird;
- Fig. 8A & Fig. 8B: je eine vereinfachte Darstellung eines Ausführungsbeispiels einer Kraftmessvorrichtung mit einem Einkoppelungsmittel für das Verschiebegewicht;
- Fig. 9A & Fig. 9B: ein einachsiges-Diagramm zur Wägefensterverschiebung in einem Push-System (9A), und in einem Push-Pull-System (9B);
- Fig. 10A & Fig. 10B: ein zweiachsiges-Diagramm zur Solllastpositionierung innerhalb eines Wägefensters für ein Push-System (10A), und für ein Push-Pull-System (10B).

Merkmale mit gleicher Funktion und ähnlicher Ausgestaltung sind in der folgenden Beschreibung mit denselben Bezugszeichen versehen. Im Folgenden werden beide Messprinzipien behandelt namentlich jenes anhand eines Push-Systems und jenes anhand eines Push-Pull-Systems.

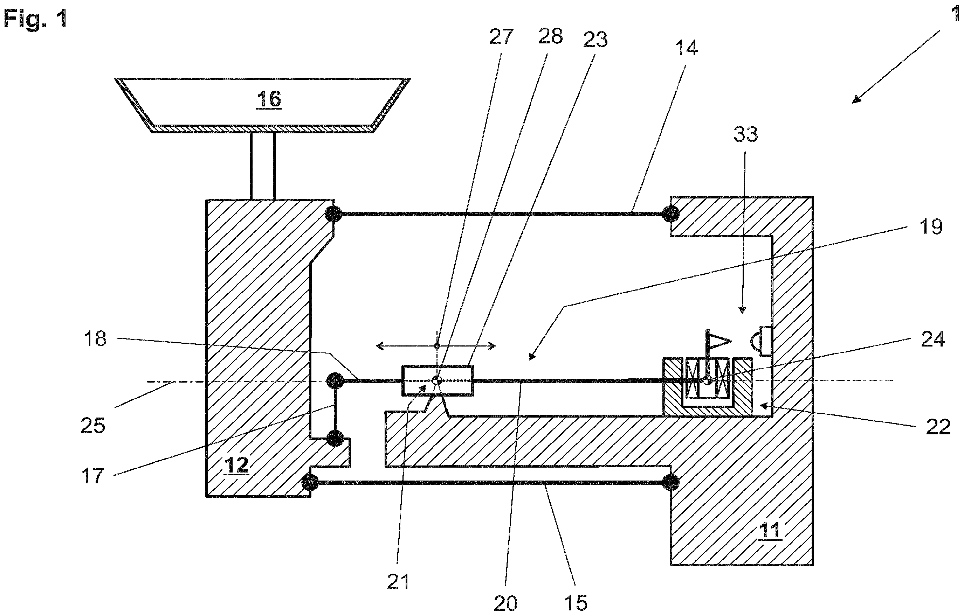

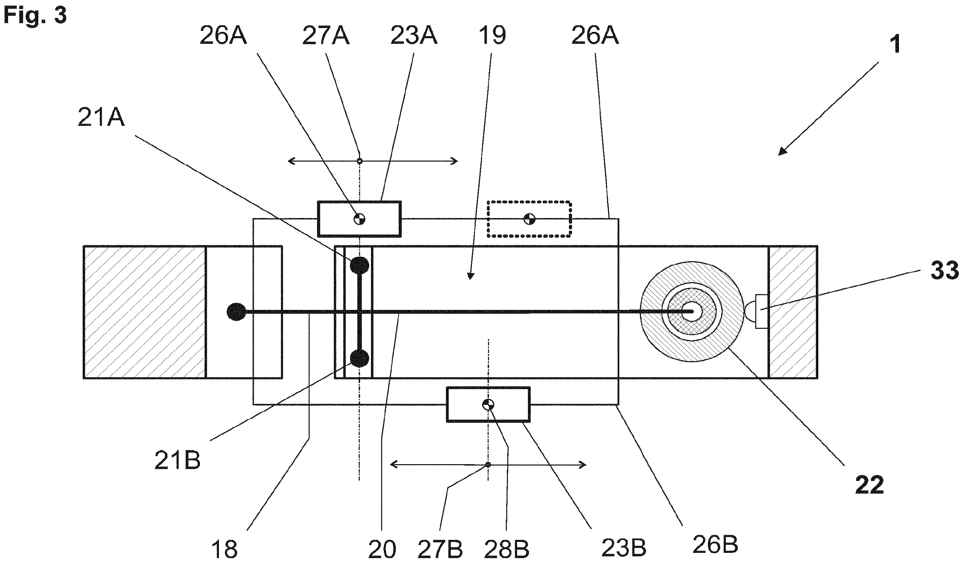

Figur 1 zeigt eine schematische Darstellung einer erfindungsgemässen Kraftmessvorrichtung 1 von der Seite in einer Schnittdarstellung. Über den feststehenden Bereich 11 ist die Kraftmessvorrichtung 1 auf einer Unterlage abgestützt. Auf den Lastaufnahmebereich 12, welcher durch zwei Parallellenker 14 und 15 mit dem feststehenden Bereich 11 verbunden ist, wird die zu messende Last über eine Schale 16 aufgelegt. Die hier gezeigte Variante als oberschalige Ausführung ist nicht zwingend. Die Kraftmessvorrichtung 1 kann ebenso als unterschalig ausgeführt werden. Die Koppel 17 überträgt die Gewichtskraft auf den ersten Hebelarm 18 des Wägebalkens 19, welcher an der Lagerstelle 21 (in der Figur 1 durch das Verschiebegewicht 23 verdeckt), welche als ein Paar von zwei Auflagestellen 21a und 21b (siehe Figur 3) definiert ist, gelagert ist. Am zweiten Hebelarm 20 ist an seinem äusseren Ende der Messaufnehmer 22 positioniert, welcher die untersetzte Gewichtskraft mit einer Kompensationskraft kompensiert. Die erfasste Messgrösse des Messaufnehmers 22 kann verwendet werden, um die Position des Verschiebegewichts 23 entlang des Wägebalkens 19 zu bestimmen. Die Bestimmung der Position des Verschiebegewichts 23 kann aber auch direkt durch die Messgrösse der Positionsmessvorrichtung 33 bestimmt werden. Gemessen und überwacht wird die Position des Verschiebegewichts 23 durch eine Verschiebemessvorrichtung. Diese kann auch dazu dienen das Verschiebegewicht 23 durch Vorgaben des Benutzers, oder einer mit dem gravimetrischen Messinstrument in Verbindung stehenden Erkennungsvorrichtung, an die für die Kompensationskraft nötige Position zu steuern.

Der Verschiebebereich des Verschiebegewichts 23 in einem Push-Pull-System beginnt an einer Anfangsposition, bei welcher die maximale Kompensationskraft des Verschiebegewichts 23 mit der Kompensationskraft des Messaufnehmers 22 gleichgerichtet ist, besitzt eine neutrale Position 27, von welcher das Verschiebegewicht 23 keinen Einfluss auf das Gleichgewichtsverhalten des Wägebalkens 19 hat, und endet an einer Endposition, bei welcher die maximale Kompensationskraft des Verschiebegewicht 23 der Kompensationskraft des Messaufnehmers 22 entgegenwirkt. Die neutrale Position 27 ist bei einem Push-System auf Höhe der Auflagestelle 21 und zugleich die Anfangsposition des Verschiebebereichs. Für ein Push-Pull-System entspricht die neutrale Position 27 irgendeinem Zwischenwert zwischen der Anfangsposition und der Endposition des Verschiebebereichs, je nach Auslegung der Mechanik und des Messaufnehmers 22 der Kraftmessvorrichtung 1. Bei einem symmetrischen Push-Pull-System entspricht die neutrale Position 27 der Mitte des Wägefensters, das Push-Pull-System besitzt also gleiche Push- wie Pull-Anteile.

Dadurch, dass der Messaufnehmer 22 in einem Push-System die Kompensationskraft in nur eine Richtung erzeugen kann, beginnt der Verschiebebereich des Verschiebgewichts 23 einer Kraftmessvorrichtung mit Push-System an der neutralen Position 27, von welcher das Verschiebegewicht keinen Einfluss auf das Gleichgewichtsverhalten des Wägebalkens 19 hat, und endet an einer Endposition, bei welcher die maximale Kompensationskraft des Verschiebegewicht 23 mit der Kompensationskraft des Messaufnehmers 22 gleichgerichtet ist. Wird die in Figur 1 dargestellte Kraftmessvorrichtung als Push-System betrachtet ist die neutrale Position 27 des Verschiebegewichts 23 an der Auflagestelle 21, und kann in Richtung des Messaufnehmers 22 verschoben werden.

Für die Positionsbestimmung ist jeweils der Massenschwerpunkt 28 der verschiebbaren Masse massgebend. Im Massenschwerpunkt 28 sind alle dem jeweiligen Verschiebegewicht 23 zugehörigen beweglichen und/oder verschiebbaren Teile zusammengefasst. Wird das Verschiebegewicht 23 relativ zum Messaufnehmer 22 verschoben wird dieser in der Erzeugung der Kompensationskraft entsprechend entlastet oder belastet, d.h. das Wägefenster wird hin zu schwereren beziehungsweise leichteren Lasten verschoben, oder anders gesagt wird damit der Betriebspunkt der Kraftmessvorrichtung 1 an den mechanischen Nullpunkt angepasst. Praktisch genutzt wird dies bei einer Einwägung einer Totlast, zum Beispiel eines Gefässes für die Aufnahme des Wägeguts. Das Wägefenster kann so ideal an das Messvorhaben angepasst werden. Dies gilt sowohl für das Push- wie auch für das Push-Pull-System.

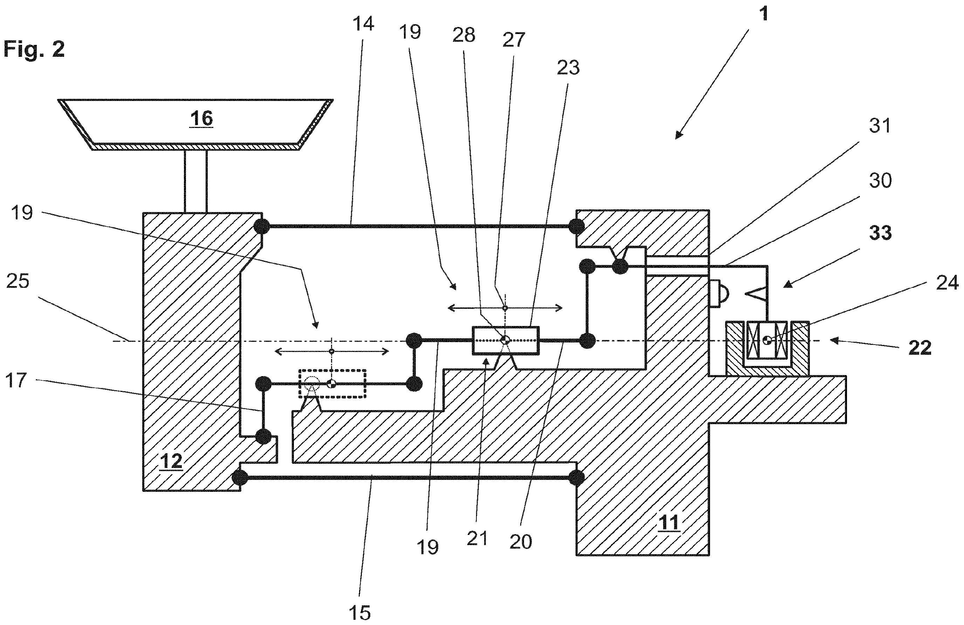

In ebenfalls vereinfachter Darstellung zeigt Figur 2 die Ausführungsform aus Figur 1, jedoch mit zusätzlichen Hebeln. Die am Lastaufnahmebereich 12 aufgelegte Last wird über die Koppel 17 und über einen dem Wägebalken 19 vorgeschalteten Hebel 29 an den ersten Hebelarm 18 des Wägebalkens 19 übertragen. Vom zweiten Hebelarm 20 führt ein nachgeschalteter Hebel 30 die Last dem Messaufnehmer 22 zu. Dank der Durchführung 31 kann der Messaufnehmer 22 an einem für Wartungs- und/oder Reparaturarbeiten gut zugänglichen Ort platziert werden. Anders als in Figur 1 wird in der Darstellung der Figur 2 das Verschiebegewicht 23 jedoch vom Messaufnehmer 22 weg verschoben, um einer auf den Lastaufnahmebereich 12 wirkenden Last entgegen wirken zu können. Der Effekt, dass der Messaufnehmer 22 in der Erzeugung der Kompensationskraft entlastet wird, ändert sich dadurch nicht. Bei der Verwendung von weiteren Hebeln 29 bzw. 30 ist also darauf zu achten, dass sich die Verschieberichtung zu schwereren bzw. leichteren Lasten entsprechend der Anzahl der Hebelübersetzungen wechselt. Vorteilhaft ist die Auslegung der Hebelübersetzungen so, dass das Eigengewicht des Messaufnehmers 22 einer auf den Lastaufnahmebereich 12 wirkenden Last entgegenwirkt. Es sei hier nochmals erwähnt, dass es keine Rolle spielt an welchem Hebel 29, 30, beziehungsweise Wägebalken19, das mindestens eine Verschiebegewicht 23 angeordnet ist, jedoch kann durch eine grössere Kraftübersetzung eine grössere Kompensationskraft erreicht werden. Möglich ist auch die Verwendung von mehreren Verschiebegewichten 23 an mehr als einem Hebel. Je nach Kraftübersetzung kann so eine Grob- und/oder eine Feineinstellung der Kompensationskraft vorgenommen werden.

In der stark schematisierten Schnittdarstellung der Figur 3 ist der Wägebalken 19 mit zwei Verschiebegewichten 23A und 23B ausgeführt, welche unabhängig voneinander entlang der Verschiebeachsen 26A und 26B verschoben werden können, um z.B. eine Auftriebskompensation zu ermöglichen. Eine Auftriebskompensation hat denselben Verfahrensablauf wie eine Sollwerteinstellung (siehe weiter oben). Anschliessend an das Positionieren der Verschiebegewichte 23A und 23B wird, nach Übermittlung der Dichte des Wägeobjekts an die Verarbeitungseinheit 35 (in Figur 3 nicht dargestellt) durch den Benutzer oder mittels einer mit dem gravimetrischen Messinstrument in Verbindung stehenden Erkennungsvorrichtung, die Anpassung vorgenommen. Dabei werden die Verschiebegewichte 23A und 23B, ausgehend von Ihrer vorherigen Position je nach individuellem Dichtewert unterschiedlich in Richtung des Messaufnehmers 22 oder in Richtung des Lastaufnahmebereiches 12 verschoben, wie folgend anhand eines Beispiels erklärt wird.

Als Beispiel seien zwei Verschiebegewichte 23A und 23B mit den Dichten 7 kg/dm³ und 9 kg/dm³ montiert. Dies in Voraussicht eine Referenzmasse aus Stahl mit einer Dichte von 7.8 kg/dm³ zu verwiegen. Nach der Sollwerteinstellung, wie weiter oben beschrieben, sind die Verschiebegewichte 23A und 23B auf selber Höhe und kompensieren die Gewichtskraft nach den vordefinierten Messvorgaben, z.B. als metrologische Messung je zur Hälfte durch die Verschiebegewichte 23A, 23B und durch den Messaufnehmer 22. Zu diesem Zeitpunkt ist der Wägebalken 19 im Gleichgewicht. Würde sich bei dieser Messung über längere Dauer nun die Luftdichte ändern, bekämen nicht beide Seiten des Wägebalkens 19 dieselben Auftriebsänderungen mit, denn die Verschiebegewichte 23A und 23B als eine Einheit betrachtet, hätten eine Dichte von 8.0 kg/dm³, also 0.2 kg/dm³ Abweichung von der Dichte der Referenzmasse. Als Folge würde das Messresultat der Kraftmessvorrichtung 1 vom tatsächlichen Wert abweichen und die Messung unbrauchbar machen.

Um den Auftrieb zu kompensieren steuert nun die Verarbeitungseinheit 35 im Anschluss an die Sollwerteinstellung die Verschiebegewichte 23A und 23B aufgrund einer im Speicher der Verarbeitungseinheit 35 hinterlegten Formel einzeln an. Das Verschiebegewicht mit niederer Dichte wird in Richtung des Messaufnehmers 22 bewegt und dasjenige mit höherer Dichte in Richtung der Auflagestellen 21A und 21B, in der Weise, dass der gemeinsame Massenschwerpunkt der Verschiebegewichte 23A und 23B nicht verschoben wird. Durch den unterschiedlichen Abstand der Verschiebegewichte 23A und 23B besitzen die Verschiebegewichte 23A und 23B zusammen betrachtet nun eine Dichte von 7.8 kg/dm³, was der Dichte der Referenzmasse entspricht und gleichbedeutend ist mit identischem Auftrieb wie derjenige der Referenzmasse.

Betrachtet man die Kraftmessvorrichtung 1 aus Figur 3 als Push-System so befindet sich das erste Verschiebegewicht 23A gerade in der neutralen Position 27A, während das zweite Verschiebegewicht 23B einer auf den Lastaufnahmebereich 12 wirkenden Last entgegenwirkt.

Unter der Annahme, die Kraftmessvorrichtung 1 aus Figur 3 sei ein symmetrisches Push-Pull-System, wäre das Verschiebegewicht 23B in der Position, in welcher dessen Kompensationskraft einer auf den Lastaufnahmebereich 12 wirkenden Last entgegenwirkt, und das andere Verschiebegewicht 23A wäre gerade in der neutralen Position 27A, in welcher dessen Kompensationskraft keinen Einfluss auf das Gleichgewichtsverhalten des Wägebalkens 19 hat. Das gestrichelt dargestellte Verschiebegewicht wäre demnach in einer Position, in welcher dessen Kompensationskraft einer auf den Lastaufnahmebereich 12 wirkenden Kraft ebenfalls entgegenwirkt.

In einer nach dem Push-Pull-Prinzip arbeitende Kraftmessvorrichtung 1 kann das nötige, am zweiten Hebelarm angebrachte Zusatzgewicht im Verschiebegewicht integriert sein. Dies verschiebt demnach die neutrale Position 27 des Verschiebegewichts 23, 23A, 23B in Richtung des Messaufnehmers.

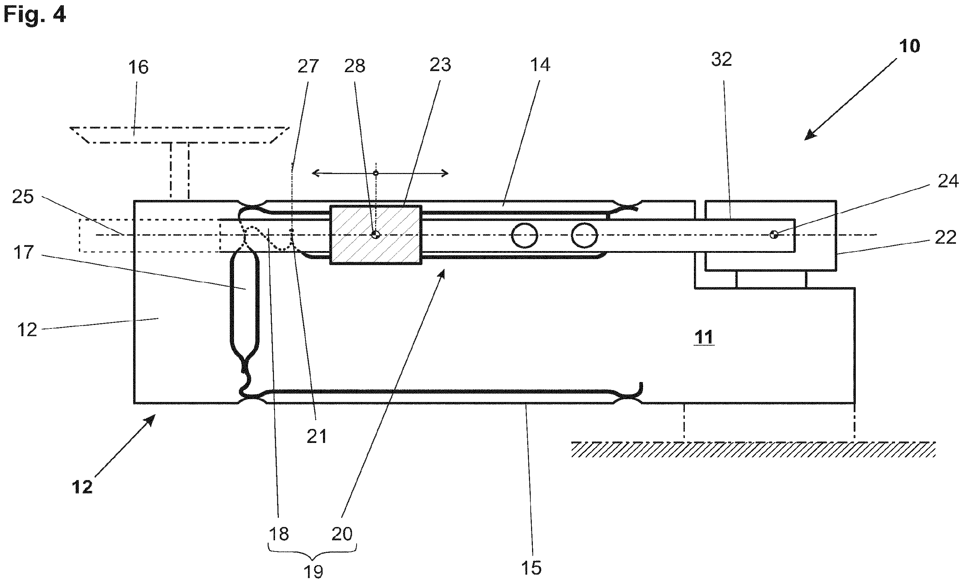

Figur 4 zeigt eine mögliche Ausgestaltung einer Kraftmesszelle 10 einer Kraftmessvorrichtung 1, als monolithische Zelle. Am zweiten Hebelarm 20 (weitestgehend von der Führung 32 verdeckt) des Wägebalkens 19 ist seitlich eine Führung 32 angebracht, welche den zweiten Hebelarm 20 zum Messaufnehmer 22 hin verlängert und zugleich als Verschiebeachse 26 des Verschiebegewichts 23 dient. Die selbige Anordnung kann ebenfalls auf der der in der Figur gezeigten gegenüberliegenden Seite angebracht sein oder auf beiden Seiten gleichzeitig. Wenn die Drehachse und der Massenschwerpunkt des Wägebalkens 19 (mit Spule aber ohne Verschiebegewichte), die Verbindung des ersten Hebelarms 18 mit der Koppel 17, und der Krafterzeugungsmittelpunkte 24 des Messaufnehmers 22, alle zusammen auf einer Ebene liegen, so ist der Wägebalken 19 ohne aufgelegte Last momentfrei und unabhängig von einem schiefen Untergrund stets im Gleichgewicht. Die so gebildete Ebene wird niveauneutrale Ebene 25 genannt.

Für eine Kraftmesszelle 10 mit einem nach dem Push-Pull-Prinzip arbeitenden Messaufnehmers 22 sollte die Führung 32 auch in Richtung des Lastaufnahmebereiches 12 verlängert werden (gestrichelt dargestellt) um eine Verschiebung des Verschiebegewichts 23 über die Lagerstelle 21 bis an eine entferntere Anfangsposition zu ermöglichen. Dies ermöglicht insbesondere die Verschiebung des mechanischen Nullpunktes (einer Kraftmessvorrichtung 1 nach dem Push-Pull-Prinzip arbeitend) bis zur Nulllast hin. Wird das mindestens eine Verschiebegewicht 23, 23A, 23B über die Position, welche der Nulllast entspricht, verschoben, wirkt dessen Gewichtskraft dem Messaufnehmer 22 entgegen und kann so als Kalibriergewicht eingesetzt werden.

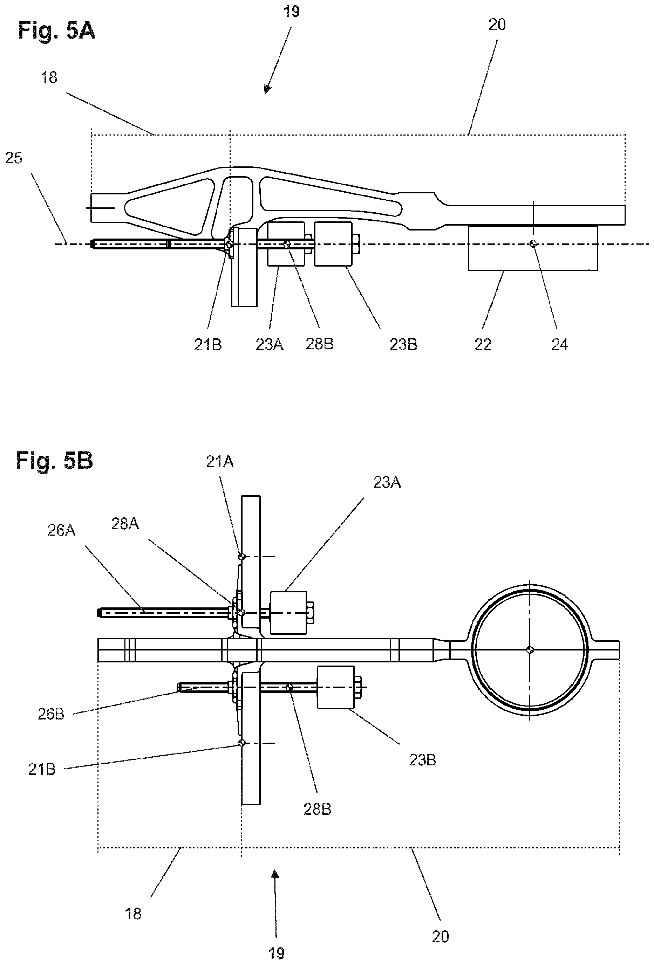

Eine mögliche Ausgestaltung eines Wägebalkens 19 wird in Figur 5A und 5B gezeigt. Am einen Ende ist der Messaufnehmer 22 angebracht, welcher die Kompensationskraft erzeugt. Der Krafterzeugungsmittelpunkt 24, dargestellt durch einen Punkt mit schwarz-weisser Musterung, liegt auf der niveauneutralen Ebene 25. Ebenfalls liegen die jeweiligen Massenschwerpunkte 28A und 28B der beiden Verschiebegewichte 23A und 23B auf der niveauneutralen Ebene 25, wie auch die Auflagestellen 21A und 21B (in Figur 5A verdeckt). In beiden Figuren 5A und 5B ist der Massenschwerpunkt 28A des Verschiebegewicht 23A auf gleicher Höhe wie die Lagerstellen 21A und 21B dargestellt, das Verschiebegewicht 23A bewirkt also, im Gegensatz zum Verschiebegewicht 23B, welches in Richtung Messaufnehmer 22 verschoben ist, kein Moment auf den Wägebalken 19. Mit den gepunkteten Linien wird gezeigt welche Teile des Wägebalkens 19 zum ersten Hebelarm 18 gehören, und welche zum zweiten Hebelarm 20. In Fig. 5B ist zu sehen, dass das Verschiebegewicht 23A noch weiter vom Messaufnehmer 22 weg verschoben werden kann.

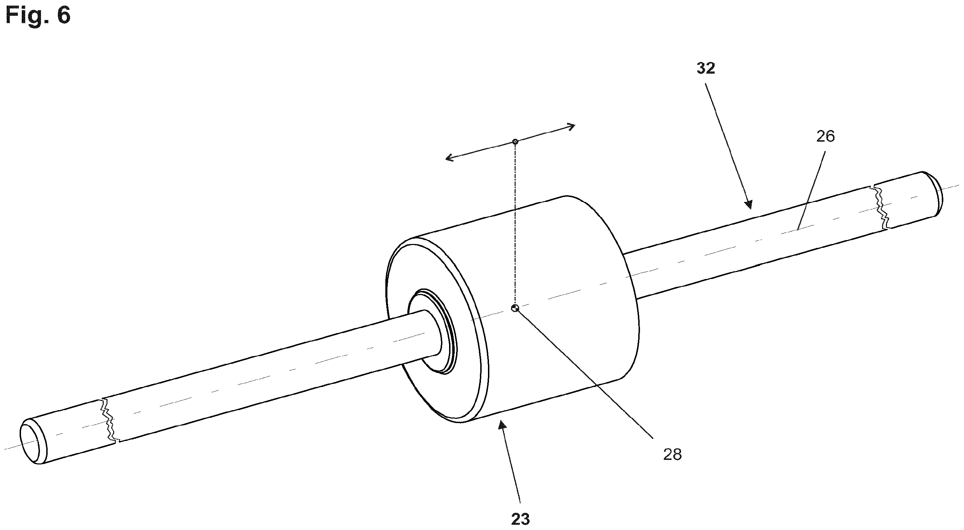

Figur 6 zeigt ein Beispiel eines Verschiebegewichts 23, welches in den Figuren 1 bis 5, 7 und 8 jeweils als Verschiebegewicht 23, 23A, 23B, 823 dargestellt ist, und entlang einer Verschiebeachse 26, hier als runde Führung 32 ausgestaltet, verschiebbar ist. Für die Verschiebeachse 26 gibt es weitere Ausführungsformen, welche geeignet sind, das Verschiebegewicht 23 entlang einer Verschiebeachse 26 zu führen, zum Beispiel eine Gewindespindel, eine Zahnschiene oder eine Nutschiene oder weitere, insbesondere verdrehsichere Profile. Der Antrieb zur Verschiebung eines Verschiebegewichts 23 kann als elektrischer Drehantrieb einer Gewindespindel, oder als Linearantrieb, oder als piezoelektrischer Motor ausgebildet sein. Ebenfalls kann der Motor Teil des Verschiebegewichts 23, 23A, 23B selbst sein.

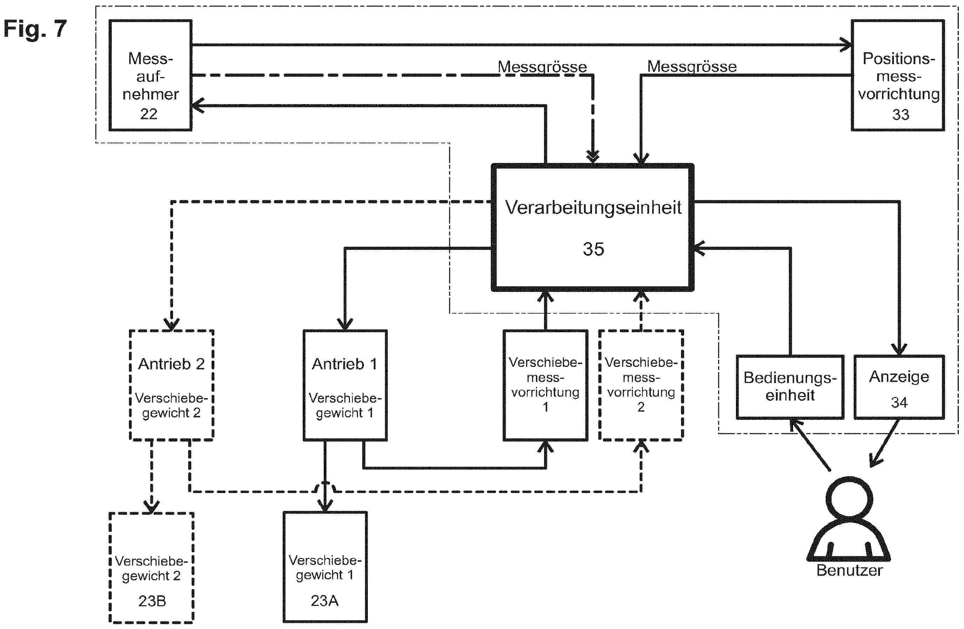

Das Blockdiagram aus Figur 7 veranschaulicht die Funktionsabläufe in der erfindungsgemässen Kraftmessvorrichtung 1. Heute gebräuchliche Kraftmessvorrichtungen nach dem MFR-Prinzip beinhalten mindestens jene Elemente, die innerhalb der strichpunktierten Umrahmung dargestellt sind. Im Normalbetrieb, d.h. einer gebräuchlichen MFR- Kraftmessvorrichtung entsprechend, erhält die Verarbeitungseinheit 35 von der Positionsmessvorrichtung 33, meist als optoelektronischer Sensor ausgestaltet, die Grösse und Richtung der Abweichung zum Gleichgewichtszustand. Aus diesen Informationen steuert die Verarbeitungseinheit 35 über den Messaufnehmer 22 die Kompensationskraft. Dieser Prozess wiederholt sich ständig, wobei die Verarbeitungseinheit 35 aus der Messgrösse des Messwertaufnehmers 22 die Gewichtskraft des Wägeobjekts berechnet welche auf einer Anzeige 34 dem Benutzer mitgeteilt wird.

Im Kompensationsbetrieb einer Kraftmessvorrichtung 1 nach erfinderischer Lösung ist mindestens ein Verschiebegewicht 23 an einem Wägebalken 19 angeordnet, mit welchem die Verarbeitungseinheit 35 durch Ansteuern eines Antriebs dieses verschieben kann, um ebenfalls eine Kompensationskraft zu erzeugen. Die vom Verschiebegewicht 23 erzeugte Kompensationskraft wirkt dabei direkt auf den Messaufnehmer 22 und die dabei erfasste Messgrösse des Messaufnehmers 22 kann unmittelbar die Stellgrösse für die Position des Verschiebegewichts 23 bestimmbar bzw. bestimmt sein. Der Verarbeitungseinheit 35 stehen also zwei Möglichkeiten zur Verfügung, um die Kompensationskraft an das zu wägende Objekt anzupassen. Die dabei erzielten Wirkungen bestehen darin eine auf den Lastaufnahmebereich 12 wirkende Last, oder den Auftrieb dieser Last, zu kompensieren, oder das Wägefenster der Kraftmessvorrichtung 1 zu verändern, oder die Empfindlichkeit auf rotative Schwingungen teilweise oder ganz zu kompensieren, oder mehrere der eben aufgezählten Möglichkeiten gleichzeitig zu erfüllen. Als Stellgrösse für die Position des Verschiebegewichts 23 kann auch die Messgrösse der Positionsmessvorrichtung 33 bestimmbar bzw. bestimmt sein.

Eine Verschiebemessvorrichtung erfasst und überwacht die Position des Verschiebegewichts 23A, 23B entlang des Verschiebebereichs. So weiss die Verarbeitungseinheit 35 ständig an welcher Position sich das Verschiebegewicht 23A, 23B befindet, und kann durch hinterlegte Positionseinstellungen, oder Vorlastkompensationseinstellungen, Auftriebskompensationseinstellungen und/oder Rotationskompensationseinstellungen die Kompensationskraft des mindestens einen Verschiebegewichts 23, 23A, 23B berechnen. In umgekehrter Weise kann die Verarbeitungseinheit 35 anhand der oben erwähnten, hinterlegten Einstellungen, bestimmen wo das mindestens eine Verschiebegewicht 23, 23A, 23B zu positionieren ist.

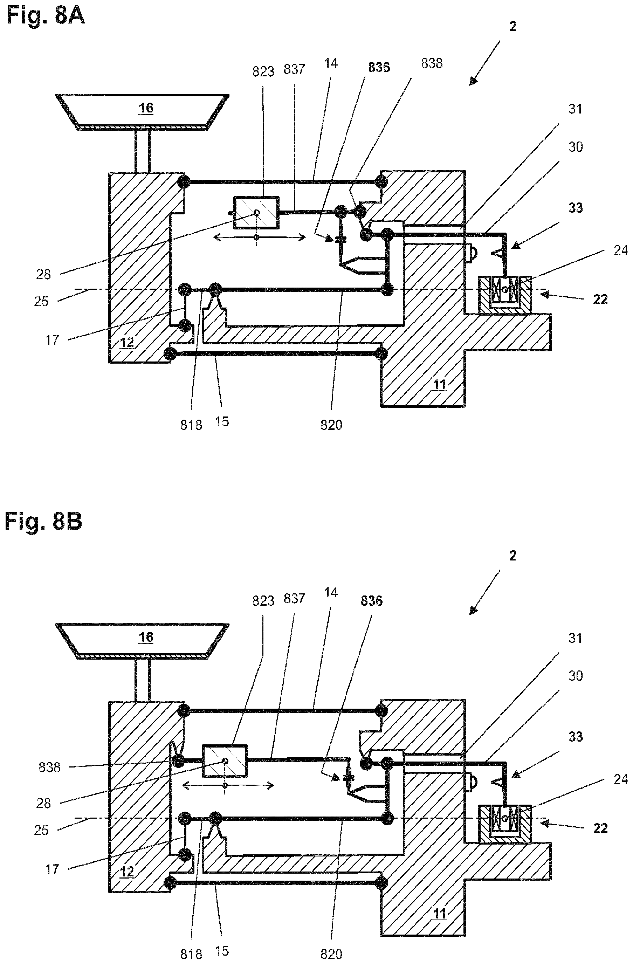

Figur 8A und 8B zeigen je eine weitere Ausgestaltung der in Figur 1 gezeigten Kraftmessvorrichtung 1. Viele Bauteile gleichen jenen in Figur 1 und Figur 2 und weisen daher dieselben Bezugszeichen auf. Für die Beschreibung dieser Bauteile sei daher auf die Beschreibung der Figuren 1 und 2 verwiesen.

Im Unterschied zur Ausgestaltung gemäss Figur 1, weisen die Kraftmessvorrichtungen 2 aus Figur 8A und 8B ein Verschiebegewicht 823 auf, welches am separaten Verschiebegewichtshebel 837 zwischen der Gelenkstelle 838 und einem Einkoppelungsmittel 836 angeordnet ist. Das Einkoppelungsmittel 836 ist hier als unidirektionales, eine Druckkraft übertragendes Einkoppelungsmittel 836 ausgestaltet. Vorzugsweise kann die Position des Verschiebegewichts 823 verändert werden, dieses also auf dem Verschiebegewichtshebel 837 verschoben und wieder fixiert werden. Das derart ausgestaltete Verschiebegewicht 823 ist so Teil einer Ausführungsform, bei welcher die über das Einkoppelungsmittel 836 auf den zweiten Hebelarm 820 übertragene Kraft des Verschiebegewichts 823 einer auf den Lastaufnahmebereich 12 aufgelegten Last entgegenwirkt. Figur 8A und 8B unterscheiden sich lediglich in der Anordnung der Gelenkstelle 838. Während sich in Figur 8A der Gelenkpunkt am feststehenden Bereich 11 befindet, ist er in Figur 8B am Lastaufnahmebereich 12 angebracht. Weitere Ausführungsvarianten ergeben sich bei einem auf Zugkraft übertragenden Einkoppelungsmittel.

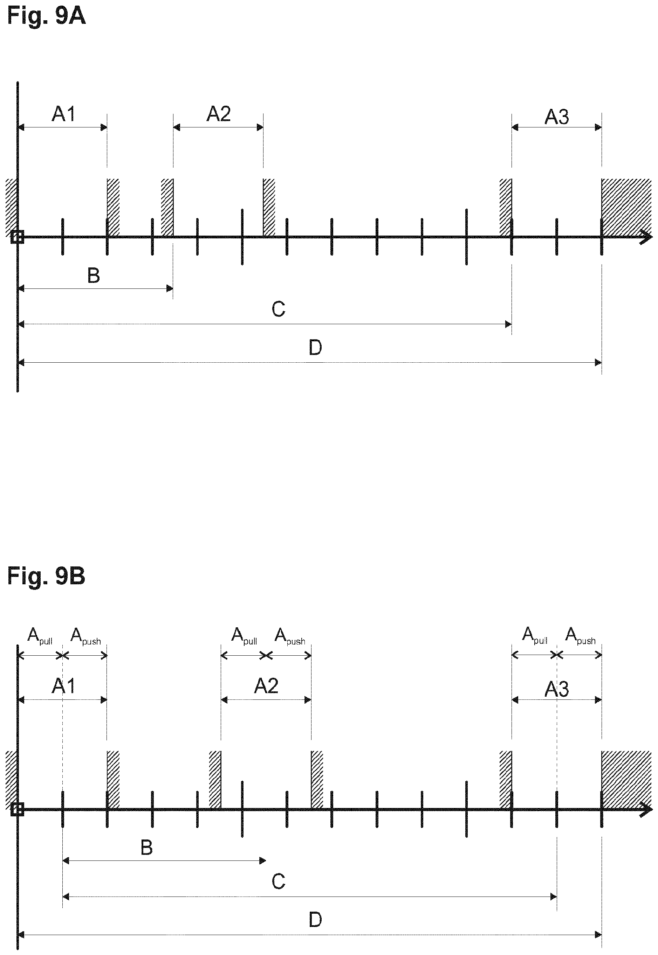

In Figur 9A und 9B ist schematisch entlang einer horizontalen Achse, welche der Gewichtskraft einer aufgelegten Last oder der Gesamtkompensationskraft einer Kraftmessvorrichtung 1 entspricht, dargestellt, wie das Wägefenster A innerhalb des Wägebereichs D einer erfinderischen Kraftmessvorrichtung 1 veränderbar ist. Als Wägebereich einer Kraftmessvorrichtung 1 wird jener Gewichtsbereich verstanden, in welchem die Masse des Wägeguts bestimmt werden kann. Die Bereiche A1, A2, A3 stellen Wägefenster der Kraftmessvorrichtung 1 an verschiedenen Positionen dar. Die jeweilige Breite dieser Bereiche bleibt konstant und wird definiert durch die maximale Kompensationskraft des Messaufnehmers 22 (Generell gilt: je stärker die Kompensationskraft eines Messaufnehmers ist, umso breiter wird das entsprechende Wägefenster).

Ist das mindestens eine Verschiebegewicht 23 eines Push-Systems in seiner neutralen Position 27 so entspricht dies dem Wägefenster A1 in Figur 9A. Eine Verschiebung des Wägefensters A1 um den Verschiebeweg B ergibt das Wägefenster A2. Die der aufgelegten Last entgegengebrachte Kompensationskraft setzt sich nun aus einem Teil des Verschiebegewichts und aus einem Teil des Messaufnehmers 22 zusammen. Eine Verschiebung B kann stufenlos erfolgen und ermöglicht eine kontinuierliche Verschiebung des Wägefensters A.

Die Figur 9B ist, der Figur 9A entsprechend, für ein Push-Pull-System dargestellt. Die Wägefenster A1, A2 und A3 besitzen je einen Push- und einen Pull-Anteil. Dieser Anteil ist in Figur 9B symmetrisch dargestellt, kann aber je nach Auslegung des Messaufnehmers 22 auch asymmetrische, d.h. unterschiedlich grosse Anteile aufweisen. Im Übergang von Push- zu Pull-Anteil liegt der mechanische Nullpunkt einer solchen Kraftmessvorrichtung 1. Das Wägefenster A2 ist um den Verschiebeweg B verschoben und vorteilhaft so positioniert, dass die Kompensationskraft des Verschiebegewichts 23 der aufgelegten Last entspricht, beziehungsweise so, dass die Kraftmessvorrichtung 1 im mechanischen Nullpunkt betrieben wird. Die Verschiebung eines Wägefensters A wird auch angewendet um eine Vorlastkompensation eines Messgefässes vorzunehmen.

Die maximale Verschiebung C ist erreicht bei vollständig ausgefahrenem Verschiebegewicht 23 und in Addition mit dem Wägefenster A ergibt sich der Wägebereich D der Kraftmessvorrichtung. Während bei heute gebräuchlichen MFR-Kraftmessvorrichtungen der Wägebereich dem Wägefenster entspricht, lässt sich bei einer erfindungsgemässen Kraftmessvorrichtung 1 der Wägebereich um ein vielfaches des Wägefensters erweitern. Je genauer die Verschiebbarkeit der Verschiebegewichte 23, 23A, 23B erfolgt, umso schwerere Verschiebegewichte 23, 23A, 23B können verwendet werden, und umso grösser wird der Wägebereich.

Anhand der Figur 10A soll anhand eines Beispiels der Ablauf einer Sollwerteinstellung bei einer Einwägung eines spezifischen Messgefässes für ein Push-System gezeigt werden (gepunktete Linie). Das Diagramm zeigt die Kompensationskraft des Messaufnehmers 22 (F-Achse) in Abhängigkeit zur Position des mindestens einen Verschiebegewichtes 23 (P-Achse). Als Ausgangslage ist ein Messgefäss auf der Schale 16 platziert, welches von der Kraftmessvorrichtung 1 nicht gemessen werden kann, da es zu schwer und somit ausserhalb des Wägefensters A liegt. Durch Starten des Einwägevorgangs erfasst die Verarbeitungseinheit 35 über den Messaufnehmer 22, dass das Wägefenster A unterhalb der aufgelegten Last ist (Der Messaufnehmer 22 erbringt die volle Kompensationskraft; 100%) und es erfolgt die Ansteuerung und Verschiebung des mindestens einen Verschiebegewichts 23, mit welcher der Kompensationskraftanteil des Verschiebegewichts 23 zunimmt. Ab Punkt X gelangt die Messung wieder innerhalb des Wägefensters A jedoch an dessen oberen Ende, d.h. bei noch maximaler Kompensationskraft des Messaufnehmers 22. Das mindestens eine Verschiebegewicht 23 verfährt aber, in einem Push-System, in dieselbe Richtung weiter bis der Messaufnehmer 22 noch einen Kompensationskraftanteil von ca. 2% - 8% (Wert bestimmt durch Eingabe des Benutzers oder durch Funktion "Einwägung" in der Verarbeitungseinheit 35 definiert) der Gesamtkompensationskraft leistet. Die Kraftmessvorrichtung 1 ist nun bereit zum Wägen des Wägeguts, welches mit dem Messgefäss auf die Schale 16 gelegt würde. Zum Wägen einer Last steht nun das restliche Wägefenster (92% - 98%) zur Verfügung.

In einem Push-Pull-System, gemäss Figur 10B, verfährt das Verschiebegewicht 23 ab Erreichen der Position X vorzugsweise solange weiter bis der Kompensationskraftanteil des Messaufnehmers 22 verschwindend klein wird, d.h. an den Übergang von Push- zu Pull-Kompensationskraftanteil. Die Kraftmessvorrichtung 1 befindet sich dann im mechanischen Nullpunkt und der Messaufnehmer 22 regelt nur noch kleinste Ungenauigkeiten, wie zum Beispiel Temperatur- und Windeinflüsse etc., aus. In diesem Punkt Y liegt der optimale Betriebspunkt, an dem eine gute Regelung der Messgrösse des Messaufnehmers 22 erreicht werden kann und der Messwert genau bestimmt werden kann. Der Übergang von Push- zu Pull-Kompensationskraftanteil ist in Figur 10B symmetrisch dargestellt (50%-50%). Dies ist jedoch nicht zwingend und ist abhängig von der Auslegung der Kraftmessvorrichtung 1 bzw. des Messaufnehmers 22.

Die Verschiebung eines Verschiebegewichts 23, 23A, 23B, und die damit verbundene Positionierung, kann auf verschiedenste Arten erfolgen, zum einen mittels der vom Messaufnehmer 22 und/oder der Positionsmessvorrichtung 33 erfassten Messgrösse (wie oben beschrieben), und zum anderen mittels der Verschiebemessvorrichtung und geeigneter Ansteuerung des Antriebs der Verschiebegewichte 23, 23A, 23B.

Der Benutzer gibt als Vorgabe an der Bedienungseinheit die bekannte Masse des Messgefässes oder des genormten und/oder geprüften Kalibriergewichts ein. Nachdem das Messgefäss oder das extern aufgelegte, genormte und/oder geprüfte Kalibriergewicht auf der Schale 16 platziert wurde, erkennt die Verarbeitungseinheit 35 anhand der Positionsmessvorrichtung 33 in welche Richtung das Verschiebegewicht 23, 23A, 23B zu verschieben ist. Die Ansteuerung des Antriebs durch die Verarbeitungseinheit 35 kann in Zeitintervallen oder in Dreh- oder Schrittinkrementen erfolgen, dabei entspricht ein Zeitintervall oder Inkrement einer bestimmten Verschiebung des Verschiebegewichts 23, 23A, 23B. Bei Erreichen von Punkt X (oder Punkt Z) ist das obere (bzw. das untere) Ende des Wägefensters erreicht. Ab hier berechnet die Verarbeitungseinheit 35 mit wie vielen Zeitintervallen oder Dreh- oder Schrittinkrementen der Antrieb des Verschiebegewichts 23, 23A, 23B angesteuert werden muss, um die durch den Sollwert definierte Position zu erreichen. Dafür ist im Speicher der Verarbeitungseinheit 35 abgelegt, welchem Verschiebeweg ein Zeitintervall oder Dreh- oder Schrittinkrement entspricht. Auch möglich ist ein direktes Verschieben des Verschiebegewichts 23, 23A, 23B an die Position, welche den Vorgaben des Benutzers entspricht. Dazu greift die Verarbeitungseinheit 35 auf die ihr zur Verfügung stehenden Einstellungsparameter zurück, wie zum Beispiel einer Positionseinstellung, einer Vorlastkompensationseinstellung, einer Auftriebskompensationseinstellung, und/oder einer Rotationskompensationseinstellung.

Der optimale Betriebspunkt und die Positionierung des Wägefensters relativ zu diesem sind in einem Push-System abhängig vom Messvorhaben des Benutzers. Während für die schon erwähnte Einwägung ein zu höheren Lasten offenes Wägefenster nötig ist, ist für eine thermogravimetrische Messung ein für niedrigere Lasten ausgerichtetes Wägefenster nötig. Für die metrologischen Messungen liegt es nahe, das Wägefenster symmetrisch an die Solllast anzupassen. Das Verfahren einer Sollwerteinstellung könnte auch bei einer metrologischen oder thermogravimetrischen Messung angewendet werden, mit dem Unterschied, dass der Anteil der Kompensationskraft des Messaufnehmers 22 zur Gesamtkompensationskraft unterschiedlich ist. So liegt dieser Anteil bei einer thermogravimetrischen Messung bei ca. 92% - 98%, da im Verlauf der Messung die Masse des Wägeguts abnimmt und so das Wägefenster A zu leichteren Lasten ausgerichtet sein sollte. Bei einer metrologischen Messung kann der Sollwert etwa bei 47% - 53% liegen. Diese in etwa mittige Positionierung des Wägefensters A würde es dem Messvorhaben ermöglichen, dass der Messwert nach beiden Seiten des Sollwertes gleich entfernt liegen kann.

Für ein Push-Pull-System liegt der optimale Betriebspunkt am Übergang von Push- zu Pull-Kompensationskraftanteil, also im mechanischen Nullpunkt. Somit ist die Positionierung des Wägefensters relativ zum Betriebspunkt abhängig vom Verhältnis des Push- bzw. Pull-Anteils im Wägefenster A. Diese Anteile können unterschiedlich gross sein und sind durch die Auslegung des Messaufnehmers 22 bestimmt. Ein symmetrisches Push-Pull-System ist demnach ein Wägefenster A, welches aus gleichen Teilen Push- sowie Pull-Anteilen besteht.

Ebenfalls kann die Situation auftreten, dass das mindestens eine Verschiebegewicht 23 an seiner maximal verschobenen Position ist, d.h. der Fahrweg zu 100% ausgenutzt ist, demnach das Messgefäss zu leicht für eine Wägung ist, und somit unterhalb des Wägefensters A liegt. In diesem Fall (in der Figur 10A als strichpunktierte Linie dargestellt) verschiebt die Verarbeitungseinheit 35 das mindestens eine Verschiebegewicht 23 in Richtung der neutralen Position 27 bis die Kompensationskraft des Verschiebegewichts 23 im Gleichgewichtszustand mit der aufgelegten Last ist (Punkt Z). Die Messung ist nun am unteren Ende des Wägefensters A, d.h. die Kompensationskraft des Messaufnehmers 22 in einem Push-System ist gleich null. Mit zunehmender Verschiebung des Verschiebegewichts 23 weiter in Richtung der neutralen Position 27 nimmt der Kompensationskraftanteil des Messaufnehmers 22 ab bis der gewünschte Sollwert oder der gewünschte Betriebspunkt erreicht ist.

Unterschiedlich dazu ist bei einem Push-Pull-System (siehe Figur 10B) der Zustand des Messaufnehmers im Punkt Z: Die Kompensationskraft des Messaufnehmers 22 ist maximal im Pull-Anteil und ist abnehmend mit zunehmender Verschiebung des Verschiebegewichts in Richtung der neutralen Position 27. Der bevorzugte, optimale Betriebspunkt Y_{OPT} ist erreicht, wenn der Messaufnehmer 22 keine Kompensationskraft aufbringen muss, d.h. die Kraftmessvorrichtung 1 sich im mechanischen Nullpunkt befindet. Es kann aber auch mit einem Push-Pull-System ein Sollwert des Kompensationskraftanteils durch den Benutzer oder durch die Funktion "Einwägung" in der Verarbeitungseinheit 35 definiert werden.

In den Figuren 10A und 10B kann die Verbindungslinie zwischen den Punkten X und Z auch als ein Verhältnis von Wägefensterbreite zu Wägebereichsbreite interpretiert werden (Koeffizient < 1). Verläuft die Linie flach (Koeffizient nahe bei 1) so ist der Gewichtsbereich, in welchem die Masse des Wägeguts bestimmt werden kann, ein wenig grösser als der Gewichtsbereich, in welchem durch die Änderung der Kompensationskraft des Messaufnehmers 33 die Masse des Wägeguts gemessen werden kann. Ein grösseres Verhältnis bietet den Vorteil eine höhere Präzision bei der Feineinstellung der Kompensationskraft des Verschiebegewichts 23, 23A, 23B zu erreichen. Ist die Verbindungslinie steiler so hat die Kraftmessvorrichtung 1 einen, im Verhältnis zum Wägefenster, dementsprechend grösseren Wägebereich und erweitert somit das Einsatzgebiet einer Kraftmessvorrichtung 1.

Liegen zwei abhängige Messungen, zum Beispiel bei Wägungen von Filtern, oder einzelne Messungen einer Messreihe zeitlich lange auseinander, so dass die Waage zwischenzeitlich anderweitig gebraucht wird, muss sichergestellt werden, dass das gravimetrische Messinstrument mit denselben Konfigurationen, beziehungsweise Einstellungsparameter, verwendet wird, wie bei der ersten Messung, welche als Vergleichsmessung dienen sollte. Dies kann in einem SOP (Standard Operation Procedure) definiert werden. Dabei muss der Benutzer vor dem Wägen des Wägeguts den Kompensationskraftanteil des Messaufnehmers 22 festlegen (kann bei einem Push-Pull-System durch Messaufnehmer 22 vorgegeben sein), einen Kalibrierkörper auflegen, worauf die Kraftmessvorrichtung 1 das mindestens eine Verschiebegewicht 23, 23A, 23B positioniert und den Gewichtswert speichert. Diese beiden Tätigkeiten müssen vor der Referenzmessung und vor der Anschlussmessung gemacht werden um einen Bezugspunkt für diese Vergleichsmessung zu haben. Der Kalibrierkörper kann ein extern aufgelegtes, genormt und/oder geprüftes Gewicht sein oder ein in der Kraftmessvorrichtung 1 eingebautes Kalibriergewicht, welches zu diesem Zweck zu- oder weggeschaltet werden kann.

Bei Langzeitmessungen, wie zum Beispiel einer metrologischen Messung, hat eine Veränderung der Umgebungstemperatur, des Luftdrucks und/oder der Luftfeuchte einen Einfluss auf die Messung. Diese Veränderungen manifestieren sich in einer Änderung der Luftdichte. Nach dem archimedischen Prinzip würde bei unterschiedlicher Dichte von Wägegut und Verschiebegewicht 23 eine Abweichung durch Auftriebsänderung auftreten, sobald die Luftdichte nicht konstant bleibt. Um dieses Problem zu lösen sind mindestens zwei Verschiebegewichte 23A und 23B mit unterschiedlichen Dichten am Wägebalken 19 angeordnet. Durch unterschiedliches Positionieren der Verschiebegewichte 23A und 23B kann nicht nur die Gewichtskraft sondern auch die dem Wägegut entsprechende Dichte am zweiten Hebelarm 20 nachgebildet werden wie sie am ersten Hebelarm 18 angreift. Eine Dichtekompensation ist dann realisierbar wenn die Dichte des Wägeguts zwischen den beiden Dichten der Verschiebegewichte 23A und 23B liegt. Bei den Extremwerten der Dichte des Wägeguts, d.h. der minimalen oder maximalen Dichte des Verschiebegewichts 23A, 23B, darf dann nur das eine Verschiebegewicht 23A, 23B die Position verändern, welches die entsprechende Dichte aufweist, während das andere Verschiebegewicht 23A, 23B in der neutralen Position verbleibt. Es verkleinert sich damit auch zwangsläufig der Verschiebebereich der Kraftmessvorrichtung 1. Daher ist eine vorherige Evaluation der Verschiebegewichte 23A und 23B auf den zukünftigen Gebrauch der Kraftmessvorrichtung 1 anzupassen. Möglich wäre auch eine Reihe von Gewichten (mehr als zwei) vorzusehen mit unterschiedlichen Dichten, welche bei Nichtgebrauch sich in der neutralen Position 27 befinden, und so ohne Einfluss auf den Wägebalken sind. Je nach Messgutdichte kommen sie zur Anwendung wenn die Auswahl geeignet erscheint.

Um das Einsatzgebiet der Kraftmessvorrichtung 1 zu vergrössern kann das mindestens eine Verschiebegewicht 23, 23A, 23B ausgetauscht werden. Zum Beispiel ergibt ein schwereres Verschiebegewicht 23, 23A, 23B einen grösseren maximalen Verschiebebereich (Figur 9, C). Ein kleinerer Verschiebebereich C entsteht, aber auch eine feinere und damit präzisere Einstellungsmöglichkeit, wenn das neue Verschiebegewicht 23, 23A, 23B leichter ist als das vorher montierte. Mit dem Auswechseln von gleich schweren Verschiebegewichten mit unterschiedlichen Dichten kann die Dichte des Wägeguts berücksichtigt werden.

Der Einsatz von mehreren Verschiebegewichten 23, 23A, 23B erfordert es, diese zu synchronisieren. Eine erste Möglichkeit ist die Verschiebegewichte 23, 23A, 23B an einen Endanschlag zu fahren und durch einen im Speicher der Verarbeitungseinheit 35 abgelegten Wert abzugleichen. Weiter ist auch eine Synchronisation im mechanischen Nullpunkt möglich. Dies hat zusätzlich den Vorteil, dass hier der Einfluss eines von aussen auf die Kraftmessvorrichtung 1 wirkenden Moments am kleinsten ist, das heisst das Abgleichen am genausten wird. Letztere Möglichkeit erweist sich für Push-Pull-Systeme als besonders geeignet.

Obwohl die Erfindung durch die Darstellung eines spezifischen Ausführungsbeispiels beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Bezugszeichenliste

- 1: Kraftmessvorrichtung
- 2: Kraftmessvorrichtung mit Einkoppelungselement
- 10: Kraftmesszelle
- 11: feststehender Bereich
- 12: Lastaufnahmebereich
- 14: oberer Parallellenker
- 15: unterer Parallellenker
- 16: Schale
- 17: Koppel
- 18: erster Hebelarm
- 19: Wägebalken
- 20, 820: Zweiter Hebelarm
- 21, 21A,: 21B Auflagestelle
- 22: Messaufnehmer
- 23, 23A, 23B, 823: Verschiebegewicht
- 24: Krafterzeugungsmittelpunkt der Spule
- 25: niveauneutrale Ebene
- 26, 26A, 26B: Verschiebeachse
- 27, 27A, 27B: Neutrale Position
- 28, 28A, 28B: Massenschwerpunkt des Verschiebegewichtes
- 29: vorgeschalteter Hebel
- 30: nachgeschalteter Hebel
- 31: Durchführung
- 32: Führung
- 33: Positionsmessvorrichtung
- 34: Anzeige
- 35: Verarbeitungseinheit
- 836: Einkoppelungsmittel
- 837: Verschiebegewichtshebel
- 838: Gelenkstelle
- A: Wägefenster
- A1: Wägefenster bei neutraler Position des Verschiebegewichts
- A2: Wägefenster bei verschobenem Verschiebegewicht Wägefenster bei maximaler Verschiebung des
- A3: Verschiebegewicht
- B: Verschiebung
- C: Maximale Verschiebung bzw. maximaler Verschiebebereich
- D: Wägebereich
- X_{A}: Gleichgewichtszustand bei voller Kompensationskraft des Messaufnehmers
- X_{B}: Gleichgewichtszustand bei voller Push-Kompensationskraft
- Y: Betriebspunkt nach einer Einwägung
- Y_{OPT}: Optimaler Betriebspunkt einer Kraftmessvorrichtung als Push-Pull-System
- Z_{A}: Gleichgewichtszustand bei voller Kompensationskraft der Verschiebegewichte
- Z_{B}: Gleichgewichtszustand bei voller Pull-Kompensationskraft
- F_{Soll TGM}: Teilkompensationskraft des Messaufnehmers bei einer thermogravimetrischen Messung
- F_{Soll MET}: Teilkompensationskraft des Messaufnehmers bei einer metrologischen Messung
- F_{Soll EW}: Teilkompensationskraft des Messaufnehmers bei einem Einwägevorgang

## Patentansprüche

1. Kraftmessvorrichtung (1), nach dem elektromagnetischen Kraftkompensationsprinzip arbeitend, für ein gravimetrisches Messinstrument mit einem feststehenden Bereich (11) und mit einem Lastaufnahmebereich (12), welche durch Parallellenker (14, 15) verbunden sind, mit mindestens einem Wägebalken (19), welcher über eine an einem ersten Hebelarm (18) des Wägebalkens (19) angreifende Koppel (17) direkt oder durch weitere Hebel (29) mit dem Lastaufnahmebereich (12) verbunden ist, und welcher an einem zweiten Hebelarm (20) des Wägebalkens (19) direkt oder durch weitere Hebel (30) mit einem am feststehenden Bereich (11) angeordneten Messaufnehmer (22) verbunden ist, wobei am mindestens einen Wägebalken (19) mindestens ein Verschiebegewicht (23) angeordnet ist, **dadurch gekennzeichnet, dass** vermittels eines Antriebs die Position des Verschiebegewichts (23) vermittels der durch den Messaufnehmer (22) und/oder einer mit dem Messaufnehmer (22) zusammenwirkenden Positionsmessvorrichtung (33) erfassten Messgrösse gesteuert veränderbar ist.

2. Kraftmessvorrichtung (1) nach Anspruch 1, **dadurch gekennzeichnet, dass** durch die Veränderung der Position des Verschiebegewichts (23) die Position des Wägefensters der Kraftmessvorrichtung (1) veränderbar ist und/oder eine auf den Lastaufnahmebereich (12) wirkende Last kompensierbar ist und/oder der Auftrieb einer auf den Lastaufnahmebereich (12) wirkenden Last kompensierbar ist und/oder die Empfindlichkeit auf rotative Schwingungen teilweise oder ganz kompensierbar ist.

3. Kraftmessvorrichtung (1) nach Anspruch 1, **dadurch gekennzeichnet, dass** der Messaufnehmer (22) eine im Feld eines Permanentmagneten beweglich angeordnete elektromagnetische Spule ist und wobei der durch die elektromagnetische Spule fliessende und die Kompensationskraft erbringende Spulenstrom die Messgrösse für die Positionierung des Verschiebegewichts (23, 23A, 23B) darstellt.

4. Kraftmessvorrichtung (1) nach Anspruch 1, **dadurch gekennzeichnet, dass** die Positionsmessvorrichtung (33) ein optoelektronischer Lagesensor ist, mit einem Lichtsender und einem Lichtempfänger, welche mit einem Zwischenraum auf dem feststehenden Bereich (11) angeordnet sind, sowie eine den Zwischenraum durchsetzende und die Auslenkung der beweglichen Teile der Kraftmessvorrichtung (1) mitmachende Blendenfahne, dessen Ausgangssignal durch das Auflegen der Last auf den Lastaufnahmebereich (12) verursachten Auslenkung der miteinander verbundenen beweglichen Teile der Kraftmessvorrichtung (1) aus einer Null-Lage entspricht, und dabei die Messgrösse für die Positionierung des Verschiebegewichts (23, 23A, 23B) darstellt.

5. Kraftmessvorrichtung (1) nach einem der Ansprüche 1 bis 4, **dadurch gekennzeichnet, dass** die Position des Verschiebegewichts (23, 23A, 23B) vermittels einer Verschiebemessvorrichtung als Positionseinstellung, als Vorlastkompensationseinstellung, als Auftriebskompensationseinstellung und/oder als Rotationskompensationseinstellung des mindestens einen Verschiebegewichts (23) erfasst und in einem Speicher einer Verarbeitungseinheit (35) abgelegt werden kann, um zu einem späteren Zeitpunkt abrufbar zu sein.

6. Kraftmessvorrichtung (1) nach einem der Ansprüche 1 bis 5 , **dadurch gekennzeichnet, dass** die Verarbeitungseinheit (35) der Kraftmessvorrichtung (1) mittels einer am Lastaufnahmebereich (12) angeordneten Erkennungsvorrichtung ein Behältnis durch Strichcode oder RFID-Chip oder mittels einer mit dem gravimetrischen Messinstrument in Verbindung stehenden Erkennungsvorrichtung erkennbar ist, und die dem Behältnis zugeordnete und in einem Speicher abgelegte Positionseinstellung, und/oder Vorlastkompensationseinstellung und/oder Auftriebskompensationseinstellung und/oder Rotationskompensationseinstellung für das mindestens eine Verschiebegewicht (23, 23A, 23B) abrufbar ist.

7. Kraftmessvorrichtung (1) nach einem der Ansprüche 1 bis 6, **dadurch gekennzeichnet, dass** der Massenschwerpunkt (28) des mindestens einen Verschiebegewichts (23) auf der niveauneutralen Ebene (25) angeordnet ist und das Verschiebegewicht (23) auf dieser verschiebbar ist.

8. Kraftmessvorrichtung (1) nach Anspruch 4, **dadurch gekennzeichnet, dass** am Wägebalken (19) mindestens zwei Verschiebegewichte (23A, 23B) auf der niveauneutralen Ebene (25) angeordnet sind und die Verschiebegewichte auf dieser unabhängig voneinander verschiebbar sind.

9. Kraftmessvorrichtung (1) nach Anspruch 8, **dadurch gekennzeichnet, dass** die mindestens zwei Verschiebegewichte (23A, 23B) je eine unterschiedliche Dichte aufweisen und/oder auswechselbar ausgestaltet sind.

10. Kraftmessvorrichtung (1) nach einem der Ansprüche 1 bis 9, **dadurch gekennzeichnet, dass** an mehr als dem mindestens einen Wägebalken (19) je ein oder mehrere Verschiebegewichte (23, 23A, 23B) verschiebbar angeordnet sind.

11. Kraftmessvorrichtung (1) nach einem der Ansprüche 1 bis 10, **dadurch gekennzeichnet, dass** die Positionierung des mindestens einen Verschiebegewichts (23, 23A, 23B) mittels eines Linearantrieb oder eines piezoelektrischen Antriebs oder mittels eines Drehantriebs über eine Spindel erfolgt und dabei durch den Antrieb der Verschiebeweg des Verschiebegewichts (23, 23A, 23B) bestimmbar ist.

12. Kraftmessvorrichtung (1) nach einem der Ansprüche 1 bis 11, **dadurch gekennzeichnet, dass** die Kraftmessvorrichtung (1) einen elektrischen Antrieb zur Positionierung des mindestens einen Verschiebegewichts (23, 23A, 23B) aufweist und dieser Antrieb selbst Teil des Verschiebegewichts (23, 23A, 23B) ist.

13. Kraftmessvorrichtung (1) nach einem der Ansprüche 1 bis 12, **dadurch gekennzeichnet, dass** das mindestens eine Verschiebegewicht (823) über ein Einkoppelungsmittel (836) am Wägebalken (19) angeordnet ist, mit welchem das vom Verschiebegewicht (823) aufgebrachte Gewicht einkoppelbar und auskoppelbar ist.

14. Kraftmessvorrichtung (1) nach einem der Ansprüche 1 bis 13, **dadurch gekennzeichnet, dass** das mindestens eine Verschiebegewicht (23, 23A, 23B) derart verschiebbar ist, dass die Gewichtskraft des Verschiebegewichts (23, 23A, 23B) der Kompensationskraft des Messaufnehmers (22) entgegenwirkend ist.

15. Verfahren zur Positionierung von mindestens einem Verschiebegewicht (23, 23A, 23B) einer Kraftmessvorrichtung (1) für ein gravimetrisches Messinstrument nach einem der Ansprüche 1 bis 14, **dadurch gekennzeichnet, dass** die Positionierung von mindestens einem Verschiebegewicht (23, 23A, 23B) die folgenden Schritte aufweist:
- Auflegen einer Taralast auf den Lastaufnahmebereich (12) oder Eingabe eines Gewichtswertes durch den Benutzer oder Identifikation einer Taralast mittels einer am Lastaufnahmebereich (12) angeordneten Erkennungsvorrichtung durch Strichcode oder RFID-Chip oder mittels einer mit dem gravimetrischen Messinstrument in Verbindung stehenden Erkennungsvorrichtung,
- Eingabe eines Sollwertes in Bezug auf das Wägefenster durch den Benutzer, oder auslesen des selbigen aus einem Speicher der Verarbeitungseinheit (35) durch Festlegung des Messvorhabens
- Verschiebung des mindestens einen Verschiebegewichts (23, 23A, 23B) vermittels eines Antriebs an die entsprechende Position gemäss der Eingabe des Sollwertes.

16. Verfahren nach Anspruch 15, **dadurch gekennzeichnet, dass** zusätzlich ein Dichtewert des Wägeobjekts durch den Benutzer eingegeben wird oder mittels einer am Lastaufnahmebereich (12) angeordneten Erkennungsvorrichtung durch Strichcode oder RFID-Chip oder mittels einer mit dem gravimetrischen Messgerät in Verbindung stehenden Erkennungsvorrichtung erkannt wird, und dass nach dem Verschieben die jeweiligen Positionen von mindestens zwei Verschiebegewichten (23A, 23B) unabhängig voneinander angepasst werden.

## Claims

1. A force measurement device (1) operating according to the electromagnetic force compensation principle, for a gravimetric measuring instrument, with a stationary section (11) and a load-bearing section (12) which are connected by parallel guide rods (14, 15), with at least one weighbeam (19) which is connected to the load-bearing section (12) via a coupling (17) engaging at a first lever arm (18) of the weighbeam (19) directly or via further levers (29), and which, on a second lever arm (20) of the weighbeam (19), is connected directly or via further levers (30) to a measuring sensor (22) arranged in the stationary section (11), wherein at least one sliding weight (23) is arranged on at least one weighbeam (19), **characterised in that** by means of a drive the position of the sliding weight (23) can be changed in a controlled manner by the measuring sensor (22) and/or a measured variable recorded by a position-measuring device (33) which cooperates with the measuring sensor (22).

2. The force measurement device (1) according to claim 1, **characterised in that** due to the change in position of the sliding weight (23) the position of the weighing window of the force measurement device (1) is changeable and/or a load acting on the load-bearing section (12) can be compensated for and/or the lift of a load acting on the load-bearing section (12) can be compensated for and/or the sensitivity to rotary vibrations can be partially or wholly compensated for.

3. The force measurement device (1) according to claim 1, **characterised in that** the measuring sensor (22) is an electromagnetic coil movably arranged in the field of a permanent magnet and wherein the coil current flowing through the electromagnetic coil and producing the compensation force represents the measured variable for positioning the sliding weight (23, 23A, 23B).

4. The force measurement device (1) according to claim 1, **characterised in that** the position-measuring device (33) is an optoelectronic sensor with a light transmitter and a light receiver which are arranged with a gap between them on the stationary section (11) as well as a shutter vane extending through the gap and participating in the deflection of the moving parts of the force measurement device (1), the output signal of which corresponds to the deflection of the moving parts of the force measurement device (1) from a zero position, which deflection is caused by placing the load on the load-bearing section (12), and which thus represents the measured variable for the positioning of the sliding weight (23, 23A, 23B).

5. The force measurement device (1) according to one of claims 1 to 4, **characterised in that** the position of the sliding weight (23, 23A, 23B) can be recorded by means of a slide measurement device as a position setting, a pre-load compensation setting, a lift compensation setting and/or a rotation compensation setting of the at least one sliding weight (23) and stored in a memory of a processing unit (35) for retrieval at a later time.

6. The force measurement device (1) according to one of claims 1 to 5, **characterised in that** the processing unit (35) of the force measurement device (1) can be detected by means of a barcode or RFID chip on the vessel with the aid of a detection device arranged in the load-bearing section (12) or a detection device in communication with a gravimetric measuring instrument, and **in that** the position setting and/or pre-load compensation setting and/or lift compensation setting and/or rotation compensation setting associated with the vessel and stored in a memory can be retrieved for the at least one sliding weight (23, 23A, 23B).

7. The force measurement device (1) according to one of claims 1 to 6, **characterised in that** the centre of mass (28) of the at least one sliding weight (23) is arranged on the level-neutral plane (25) and the sliding weight (23) can be moved on the same.

8. The force measurement device (1) according to claim 4, **characterised in that** at least two sliding weights (23A, 23B) are arranged on the weighbeam (1) in the level-neutral plane (25) and the sliding weights can be moved in this plane independently of each other.

9. The force measurement device (1) according to claim 8, **characterised in that** the at least two sliding weights (23A, 23B) each have a different density and/or are designed so as to be replaceable.

10. The force measurement device (1) according to one of claims 1 to 10, **characterised in that** one or more sliding weights (23, 23A, 23B) are movably arranged on more than the at least one weighbeam (19).

11. The force measurement device (1) according to one of claims 1 to 10, **characterised in that** the positioning of the at least one sliding weight (23, 23A, 23B) is performed by means of a linear drive or a piezo-electric drive or by means of a rotary drive via a spindle and the sliding path of the sliding weight (23, 23A, 23B) can thus be determined by means of the drive.

12. The force measurement device (1) according to one of claims 1 to 11, **characterised in that** the force measurement device (1) comprises an electric drive for positioning the at least one sliding weight (23, 23A, 23B) and **in that** this drive is itself part of the sliding weight (23, 23A, 23B).

13. The force measurement device (1) according to one of claims 1 to 12, **characterised in that** the at least one sliding weight (823) is arranged on the weighbeam (19) via a coupling means (836), with which the weight applied by the sliding weight (823) can be coupled and decoupled.

14. The force measurement device (1) according to one of claims 1 to 13, **characterised in that** the at least one sliding weight (23, 23A, 23B) can be moved such that the weight force of the sliding weight (23, 23A, 23B) counteracts the compensation force of the measuring sensor (22).

15. A method for positioning at least one sliding weight (23, 23A, 23B) of a force measurement device (1) for a gravimetric measuring instrument according to one of claims 1 to 14 **characterised in that** the positioning of at least one sliding weight (23, 23A, 23B) comprises the following steps:
- Placement of a tare load on the load-bearing section (12) or input of a weight value by the user or identification of a tare load by means of barcode or RFID chip with the aid of a detection device arranged in the load-bearing section (12) or with the aid of a detection device in communication with the gravimetric measuring instrument,
- Input of a set value regarding the weighing window by the user or read-out of the same from a memory of the processing unit (35) by specifying the measuring project,
- Displacement of the at least one sliding weight (23, 23A, 23B) by means of a drive to the respective position according to the input of the set value.

16. The method according to claim 15, **characterised in that** a density value of the object to be weighed is additionally input by the user or is detected by means of a barcode or RFID chip with the aid of a detection device arranged in the load-bearing section (12) or with the aid of a detection device in communication with the gravimetric measuring device, and **in that** once the displacement has taken place, the respective positions of at least two sliding weights (23A, 23B) are adjusted independently of each

## Revendications

1. Dispositif de mesure de force (1) fonctionnant selon le principe de compensation de force électromagnétique, pour un instrument de mesure gravimétrique, avec une zone fixe (11) et une zone de réception de charge (12), lesquelles sont reliées par des bras parallèles (14, 15), avec au moins une poutre de pesage (19), laquelle est reliée à la zone de réception de charge (12) par le biais d'une bielle (17) agissant sur un premier bras de levier (18) de la poutre de pesage (19), directement ou par d'autres leviers (29), et laquelle est reliée à un capteur de mesure (22) disposé sur la zone fixe (11) au niveau d'un deuxième bras de levier (20) de la poutre de pesage (19), directement ou par d'autres leviers (30), dans lequel au moins un poids déplaçable (23) étant disposé sur l'au moins une poutre de pesage (19), **caractérisé en ce qu'**à l'aide d'un entraînement, la position du poids déplaçable (23) peut être modifiée de façon commandée à l'aide d'en fonction d'une valeur de mesure détectée par le capteur de mesure (22) et/ou par un dispositif de mesure de position (33) coopérant avec le capteur de mesure (22).

2. Dispositif de mesure de force (1) selon la revendication 1, **caractérisé en ce que** la modification de la position du poids déplaçable (23) permet de modifier la position de la fenêtre de pesage du dispositif de mesure de force (1), et/ou de compenser une charge agissant sur la zone de réception de charge (12), et/ou de compenser la portance d'une charge agissant sur la zone de réception de charge (12), et/ou de compenser partiellement ou entièrement la sensibilité aux oscillations rotatives.

3. Dispositif de mesure de force (1) selon la revendication 1, **caractérisé en ce que** le capteur de mesure (22) est une bobine électromagnétique disposée de façon mobile dans le champ d'un aimant permanent, et dans lequel le courant de bobine passant à travers la bobine électromagnétique et fournissant la force de compensation représente la valeur de mesure pour le positionnement du poids déplaçable (23, 23A, 23B).

4. Dispositif de mesure de force (1) selon la revendication 1, **caractérisé en ce que** le dispositif de mesure de position (33) est un capteur de position optoélectronique, avec un émetteur de lumière et un récepteur de lumière, lesquels sont disposés sur la zone fixe (11) avec un espace intermédiaire, ainsi qu'un talon d'étranglement suivant la déviation des parties mobiles du dispositif de mesure de force (1) et traversant l'espace intermédiaire, dont le signal de sortie correspond à une déviation par rapport à une position zéro des parties mobiles du dispositif de mesure de force (1) reliées entre elles, celle-ci étant occasionnée par la pose de la charge sur la zone de réception de charge (12), tout en représentant la valeur de mesure pour le positionnement du poids déplaçable (23, 23A, 23B).

5. Dispositif de mesure de force (1) selon l'une des revendications 1 à 4, **caractérisé en ce que** la position du poids déplaçable (23, 23A, 23B) peut être détectée à l'aide d'un dispositif de mesure de déplacement en tant que réglage de position, en tant que réglage de compensation de la précharge, en tant que réglage de compensation de la portance et/ou en tant que réglage de compensation de la rotation de l'au moins un poids déplaçable (23) et stockée dans une mémoire d'une unité de traitement (35), pour pouvoir être consultée ultérieurement.

6. Dispositif de mesure de force (1) selon l'une des revendications 1 à 5, **caractérisé en ce que** l'unité de traitement (35) du dispositif de mesure de force (1), un conteneur est détectable par code-barre ou puce RFID au moyen d'un dispositif de détection relié à l'instrument de mesure gravimétrique ou au moyen d'un dispositif de détection disposé sur la zone de réception de charge (12), et le réglage de position et/ou le réglage de compensation de la précharge et/ou le réglage de compensation de la portance et/ou le réglage de compensation de la rotation pour l'au moins un poids déplaçable (23, 23A, 23B), stocké dans une mémoire et attribué au conteneur, est consultable.

7. Dispositif de mesure de force (1) selon l'une des revendications 1 à 6, **caractérisé en ce que** le centre de masse (28) de l'au moins un poids déplaçable (23) est disposé sur le plan de niveau neutre (25), et le poids déplaçable (23) est déplaçable sur celui-ci.

8. Dispositif de mesure de force (1) selon la revendication 4, **caractérisé en ce que** sur la poutre de pesage (19), au moins deux poids déplaçables (23A, 23B) sont disposés sur le plan de niveau neutre (25), et les poids déplaçables peuvent être déplacés indépendamment les uns des autres sur celui-ci.

9. Dispositif de mesure de force (1) selon la revendication 8, **caractérisé en ce que** les au moins deux poids déplaçables (23A, 23B) présentent respectivement une densité différente et/ou sont conçus de façon interchangeable.

10. Dispositif de mesure de force (1) selon l'une des revendications 1 à 9, **caractérisé en ce que** sur un plus grand nombre que l'au moins une poutre de pesage (19), un ou plusieurs poids déplaçable (23, 23A, 23B) sont respectivement disposés de façon déplaçable.

11. Dispositif de mesure de force (1) selon l'une des revendications 1 à 10, **caractérisé en ce que** le positionnement de l'au moins un poids déplaçable (23, 23A, 23B) est réalisé au moyen d'un entraînement linéaire ou d'un entraînement piézoélectrique ou au moyen d'un entraînement rotatif par le biais d'une broche et peut ainsi être déterminé par l'entraînement du déplacement du poids déplaçable (23, 23A, 23B).

12. Dispositif de mesure de force (1) selon l'une des revendications 1 à 11, **caractérisé en ce que** le dispositif de mesure de force (1) présente un entraînement électrique pour le positionnement de l'au moins un poids déplaçable (23, 23A, 23B), cet entraînement faisant lui-même partie du poids déplaçable (23, 23A, 23B).

13. Dispositif de mesure de force (1) selon l'une des revendications 1 à 12, **caractérisé en ce que** l'au moins un poids déplaçable (823) est disposé sur la poutre de pesage (19) à l'aide d'un moyen d'accouplement (836), permettant d'accoupler et de désaccoupler le poids appliqué par le poids déplaçable (823).

14. Dispositif de mesure de force (1) selon l'une des revendications 1 à 13, **caractérisé en ce que** l'au moins un poids déplaçable (23, 23A, 23B) est déplaçable de telle façon, que la force pondérale du poids déplaçable (23, 23A, 23B) agit contre la force de compensation du capteur de mesure (22).

15. Procédé pour le positionnement d'au moins un poids déplaçable (23, 23A, 23B) d'un dispositif de mesure de force (1) pour un instrument de mesure gravimétrique selon l'une des revendications 1 à 14, **caractérisé en ce que** le positionnement d'au moins un poids déplaçable (23, 23A, 23B) comprend les étapes suivantes :
- disposition d'une tare sur la zone de réception de charge (12) ou saisie d'une valeur de poids par l'utilisateur ou identification d'une tare à l'aide du dispositif de détection disposé sur la zone de réception de charge (12), par code-barre ou puce RFID, ou au moyen d'un dispositif de détection relié à l'instrument de mesure gravimétrique,
- saisie d'une valeur de consigne quant à la fenêtre de pesage par l'utilisateur, ou lecture de celle-ci à partir d'une mémoire de l'unité de traitement (35), en fixant le projet de mesure,
- déplacement de l'au moins un poids déplaçable (23, 23A, 23B) à l'aide d'un entraînement à la position correspondant à la saisie de la valeur de consigne.

16. Procédé selon la revendication 15, **caractérisé en ce qu'**une valeur de densité de l'objet à peser est également saisie par l'utilisateur ou détectée au moyen d'un dispositif de détection disposé sur la zone de réception de charge (12), par un code-barre ou une puce RFID, ou au moyen d'un dispositif de détection relié à l'instrument de mesure gravimétrique, et **en ce qu'**après le déplacement, les positions respectives d'au moins deux poids déplaçable (23A, 23B) sont adaptées indépendamment les unes des autres.
